# EUROPEAN PATENT APPLICATION

(11) **EP 4 443 893 A1**
(43) Date of publication of application: **09.10.2024**
(21) Application number: 22900456.9
(22) Date of filing: 29.11.2022
(51) Int. Cl.: H04N 23/66

(54) **DATA PROCESSING AND DECODING METHODS, MOBILE AND CONTROL TERMINALS, ELECTRONIC SYSTEM, AND MEDIUM**

(30) Priority: 30.11.2021 CN 202111443118
(71) Applicant: Boe Technology Group Co., Ltd., Beijing 100015 (CN)
(72) Inventor: JIANG, Qianwen, Beijing 100176 (CN); CHEN, Lili, Beijing 100176 (CN); ZHANG, Hao, Beijing 100176 (CN); HAN, Peng, Beijing 100176 (CN); HE, Huidong, Beijing 100176 (CN); SHI, Juanjuan, Beijing 100176 (CN); DU, Weihua, Beijing 100176 (CN)
(74) Representative: Brötz, Helmut
(86) International application number: PCT/CN2022/134998
(87) International publication number: WO 2023/098652

(57) **Abstract**

A decoding method, a data processing method, an information generation method, a mobile terminal, a control terminal, an electronic system, and a non-transitory computer-readable storage medium. The decoding method comprises: analyzing received combined data, wherein the combined data is data obtained by combining image data photographed by a mobile terminal and mobile terminal information corresponding to a mobile terminal; and in response to the analysis, obtaining an extended data bit string corresponding to the mobile terminal information: analyzing from the combined data the extended data encoding information corresponding to the mobile terminal information, and decoding the extended data encoding information to obtain the mobile terminal information.

## Description

### CROSS-REFERENCE TO RELATED APPLICATION

The present application claims priority to Chinese patent application No. 202111443118.8, filed on November 30, 2021, the entire disclosure of which is incorporated herein by reference as part of the present application.

### TECHNICAL FIELD

Embodiments of the present disclosure relate to a data processing method, a decoding method, an information generation method, a mobile terminal, a control terminal, an electronic system, and a non-transitory computer-readable storage medium.

### BACKGROUND

First Person View (FPV) is a technology based on installation of a wireless camera on a mobile device such as an aero model and a vehicle model. The images captured by the wireless camera may be transmitted back to a controller to be viewed on a screen of the controller, and an attitude of the mobile device such as the aero model and the vehicle model is remotely controlled to complete various actions. Based on FPV, various models can be manipulated at a first view angle. The effect that FPV can achieve is that a user can immersively manipulate from the driver's view various models (e.g., an airplane, a racing car, a submarine, and other models) to move without worry about any risk.

### SUMMARY

At least one embodiment of that present disclosure also provide a decoding method, comprising: parsing combined data that is received, the combined data being data obtained by combining image data captured by a mobile terminal and mobile terminal information corresponding to the mobile terminal; and in response to obtaining, by the parsing, an extended data bit string corresponding to the mobile terminal information, parsing extended data encoding information corresponding to the mobile terminal information from the combined data, and decoding the extended data encoding information to obtain the mobile terminal information.

For example, the decoding method provided by at least one embodiment of the present disclosure further comprises: parsing image encoding information corresponding to the image data from the combined data; and decoding the image encoding information to obtain the image data.

For example, in the decoding method provided by at least one embodiment of the present disclosure, the decoding method is applied to a control terminal, the combined data is transmitted by the mobile terminal to the control terminal through an image transmission channel.

For example, in the decoding method provided by at least one embodiment of the present disclosure, the mobile terminal is an unmanned aerial vehicle, and the mobile terminal information comprises information generated by the unmanned aerial vehicle.

At least one embodiment of the present disclosure provides a data processing method, which is applied to a first mobile terminal and comprises: obtaining image data captured by the first mobile terminal; generating mobile terminal information corresponding to the first mobile terminal; combining the image data and the mobile terminal information to obtain combined data; and transmitting the combined data to a control terminal.

For example, in the data processing method provided by at least one embodiment of the present disclosure, the first mobile terminal comprises an unmanned aerial vehicle.

For example, in the data processing method provided by at least one embodiment of the present disclosure, the generating mobile terminal information corresponding to the first mobile terminal comprises: obtaining at least one first state parameter corresponding to the first mobile terminal, the at least one first state parameter being used for indicating a state of the first mobile terminal and a condition of an environment where the first mobile terminal is located; and generating, based on the at least one first state parameter, state information, the mobile terminal information comprising the state information.

For example, in the data processing method provided by at least one embodiment of the present disclosure, the first mobile terminal comprises at least one sensor; the obtaining at least one first state parameter corresponding to the first mobile terminal comprises: collecting sensing data respectively corresponding to the at least one sensor to obtain at least one sensor sensing parameter, the at least one first state parameter comprising the at least one sensor sensing parameter.

For example, in the data processing method provided by at least one embodiment of the present disclosure, the at least one first state parameter comprises at least one of following parameters: an ambient light intensity, a vision parameter, a height, a power, a distance, and an ambient temperature.

For example, in the data processing method provided by at least one embodiment of the present disclosure, the generating mobile terminal information corresponding to the first mobile terminal further comprises: obtaining an information header and mobile terminal identity information corresponding to the first mobile terminal, the mobile terminal information further comprises the information header and the mobile terminal identity information, and the information header and the mobile terminal identity information are used for identifying the first mobile terminal.

For example, in the data processing method provided by at least one embodiment of the present disclosure, the information header comprises at least one of following information: copyright information, encryption information, a product category code corresponding to the first mobile terminal, and a company code corresponding to the first mobile terminal; the mobile terminal identity information comprises application identity identification information and module identification information; the application identity identification code comprises a product brand code of a manufacturer that manufactures the first mobile terminal, a field and type code corresponding to an application field to which the first mobile terminal belongs, a frequency band code corresponding to an operating frequency band corresponding to the first mobile terminal, and a channel code corresponding to an operating channel corresponding to the first mobile terminal; and the module identification information represents a production number corresponding to the first mobile terminal.

For example, in the data processing method provided by at least one embodiment of the present disclosure, the generating mobile terminal information corresponding to the first mobile terminal further comprises: determining that any first state parameter of the at least one first state parameter does not meet a state condition corresponding to the any first state parameter, generating alerting information, the mobile terminal information further comprises the alerting information, and the alerting information is used for informing the control terminal of the first mobile terminal being in an abnormal state.

For example, in the data processing method provided by at least one embodiment of the present disclosure, the generating mobile terminal information corresponding to the first mobile terminal further comprises: in response to generating the alerting information, generating mobile terminal control information; performing an operation corresponding to the mobile terminal control information under control of the mobile terminal control information; and in response to performing the operation corresponding to the mobile terminal control information under the control of the mobile terminal control information, generating notification information, the mobile terminal information further comprises the notification information, and the notification information is used for informing the control terminal of the first mobile terminal having performed the operation corresponding to the mobile terminal control information.

For example, in the data processing method provided by at least one embodiment of the present disclosure, the generating mobile terminal information corresponding to the first mobile terminal further comprises: receiving at least one second state parameter transmitted from a second mobile terminal and corresponding to the second mobile terminal; determining, based on the at least one first state parameter and the at least one second state parameter, a relative state between the first mobile terminal and the second mobile terminal; and generating, based on the relative state, control suggestion information, the mobile terminal information further comprises the control suggestion information, and the control suggestion information indicates suggesting the control terminal to perform an operation corresponding to the control suggestion information.

For example, in the data processing method provided by at least one embodiment of the present disclosure, the transmitting the combined data to the control terminal comprises transmitting the combined data to the control terminal through a first image transmission channel.

At least one embodiment of the present disclosure also provides a data processing method, which is applied to a control terminal and comprises: receiving first combined data transmitted from a first mobile terminal, the first combined data being data obtained by combining first image data captured by the first mobile terminal and first mobile terminal information corresponding to the first mobile terminal; parsing the first combined data to obtain the first image data and the first mobile terminal information, the first image data being used for displaying; in response to the first mobile terminal information, generating first control terminal control information for controlling the first mobile terminal; and transmitting the first control terminal control information to the first mobile terminal to control the first mobile terminal.

For example, in the data processing method provided by at least one embodiment of the present disclosure, the control terminal comprises a display screen, and the data processing method further comprises: displaying the first image data on the display screen.

For example, in the data processing method provided by at least one embodiment of the present disclosure, the transmitting the first control terminal control information to the first mobile terminal to control the first mobile terminal comprises: determining, based on the first control terminal control information, a second image transmission channel; and transmitting, through the second image transmission channel, the first control terminal control information to the first mobile terminal to control the first mobile terminal.

For example, the data processing method provided by at least one embodiment of the present disclosure further comprises: receiving second combined data transmitted from a second mobile terminal, the second combined data being data obtained by combining second image data captured by the second mobile terminal and second mobile terminal information corresponding to the second mobile terminal; parsing the second combined data to obtain the second image data and the second mobile terminal information, the second image data being used for displaying; in response to the second mobile terminal information, generating second control terminal control information for controlling the second mobile terminal; and transmitting the second control terminal control information to the second mobile terminal to control the second mobile terminal.

For example, in the data processing method provided by at least one embodiment of the present disclosure, the control terminal comprises a display screen, and the data processing method further comprises: displaying the first image data and the second image data on the display screen.

For example, in the data processing method provided by at least one embodiment of the present disclosure, the display screen comprises a display region, and the display region comprises a first display sub-region; and the displaying the first image data and the second image data on the display screen comprises: displaying the first image data in the display region; and displaying the second image data in the first display sub-region; in the first display sub-region, the second image data overlies a part, in the first display sub-region, of the first image data.

For example, in the data processing method provided by at least one embodiment of the present disclosure, the display screen comprises a display region, the display region comprises a first display sub-region and a second display sub-region, and the first display sub-region and the second display sub-region do not overlap; and the displaying the first image data and the second image data on the display screen comprises: displaying the first image data in the first display sub-region; and displaying the second image data in the second display sub-region.

For example, in the data processing method provided by at least one embodiment of the present disclosure, the first control terminal control information comprises an information header, control terminal identity information, and control interaction information; the information header comprises at least one of following information: copyright information, encryption information, a product category code corresponding to the control terminal, and a company code corresponding to the control terminal, and the encryption information is determined based on the first mobile terminal information; the control terminal identity information comprises application identity identification information and module identification information; the application identity identification code comprises a product brand code corresponding to a manufacturer that manufactures the control terminal, a field and type code corresponding to an application field to which the control terminal belongs, and a frequency band code corresponding to an operating frequency band that corresponds to the control terminal; the module identification information represents a production number corresponding to the control terminal; and the control interaction information comprises at least one of following information: control mode information, mobile terminal identification information for indicating the first mobile terminal, transmission channel information, state control information, state mode information, shooting information, lighting information, and angle information, the state control information is used for controlling a motion and an attitude of the first mobile terminal.

For example, in the data processing method provided by at least one embodiment of the present disclosure, the control terminal comprises a display screen, the display screen comprises a touch remote control region; the touch remote control region comprises a plurality of virtual keys; and the control interaction information is determined based on an operation applied to the plurality of virtual keys.

At least one embodiment of the present disclosure also provides a mobile terminal, comprising: an obtaining module configured to obtain image data captured by the mobile terminal; a mobile terminal generation module configured to generate mobile terminal information corresponding to the mobile terminal; a combination module configured to combine the image data and the mobile terminal information to obtain combined data; and a mobile terminal transmission module configured to transmit the combined data to a control terminal.

At least one embodiment of the present disclosure also provides a control terminal, comprising: a receiving module configured to receive combined data transmitted from a mobile terminal, the combined data being data obtained by combining image data captured by the mobile terminal and mobile terminal information corresponding to the mobile terminal; a parsing module configured to parse the combined data to obtain the image data and the mobile terminal information, the image data being used for displaying; a control terminal generation module configured to, in response to the mobile terminal information, generate control terminal control information for controlling the mobile terminal; and a control terminal transmission module configured to transmit the control terminal control information to the mobile terminal to control the mobile terminal.

At least one embodiment of the present disclosure also provides a data processing method, which comprises: obtaining image data captured by a mobile terminal through the mobile terminal; generating mobile terminal information corresponding to the mobile terminal through the mobile terminal; combining the image data and the mobile terminal information through the mobile terminal to obtain combined data; the mobile terminal transmitting the combined data to a control terminal; parsing the combined data by the control terminal to obtain the mobile terminal information; generating control terminal control information for controlling the mobile terminal by the control terminal in response to the mobile terminal information; and the control terminal transmitting the control terminal control information to the mobile terminal to control the mobile terminal.

At least one embodiment of the present disclosure also provides an electronic system comprising a mobile terminal and a control terminal, the mobile terminal is configured to: obtain image data captured by the mobile terminal, generate mobile terminal information corresponding to the mobile terminal, combine the image data and the mobile terminal information to obtain combined data, and transmit the combined data to the control terminal; and the control terminal is configured to: receive the combined data, parse the combined data to obtain the mobile terminal information, in response to the mobile terminal information, generate control terminal control information for controlling the mobile terminal, and transmit the control terminal control information to the mobile terminal to control the mobile terminal.

At least one embodiment of the present disclosure also provides an information generation method, comprising: generating mobile terminal information corresponding to a mobile terminal, the mobile terminal information comprises an identity code of the mobile terminal, the identity code of the mobile terminal comprises a product brand code of a manufacturer that manufactures the mobile terminal and a company code corresponding to the mobile terminal, and the mobile terminal information is transmitted to a control terminal, and the control terminal identifies, based on the mobile terminal information, the mobile terminal corresponding to the mobile terminal information, and controls the mobile terminal.

At least one embodiment of that present disclosure also provide a non-transitory computer-readable storage medium, the non-transitory computer-readable storage medium stores computer-executable instructions, and the computer-executable instructions, when executed by a processor, cause implementing the decoding method according to any embodiment of the present disclosure or the data processing method according to any embodiment of the present disclosure or the information generation method according to any embodiment of the present disclosure.

### BRIEF DESCRIPTION OF DRAWINGS

In order to clearly illustrate the technical solutions of the embodiments of the present disclosure, the drawings of the embodiments will be briefly described in the following; it is obvious that the described drawings are only related to some embodiments of the present disclosure and thus are not limitative to the present disclosure.
FIG. 1 is a schematic flowchart of a data processing method provided in at least one embodiment of the present disclosure;
FIG. 2A is a schematic diagram of a low-power automatic returning scenario provided in some embodiments of the present disclosure;
FIG. 2B is a schematic diagram of a double-UAV angle-of-view switching scenario provided in some embodiments of the present disclosure;
FIG. 3 is a schematic diagram of information transmission between a first mobile terminal and a control terminal provided in some embodiments of the present disclosure;
FIG. 4 is a schematic flowchart of a data processing method provided in some embodiments of the present disclosure;
FIG. 5 is a schematic diagram of an interactive interface of a control terminal in a one-to-one control mode with a first mobile terminal provided in some embodiments of the present disclosure;
FIG. 6 is a schematic diagram of information transmission among a first mobile terminal, a second mobile terminal, and a control terminal provided in some embodiments of the present disclosure;
FIG. 7 is a schematic flowchart of another data processing method provided in some embodiments of the present disclosure;
FIG. 8 is a schematic diagram of a display interface of a display screen of a control terminal provided in some embodiments of the present disclosure;
FIG. 9 is a schematic diagram of a decoding method provided in some embodiments of the present disclosure;
FIG. 10 is a schematic block diagram of a mobile terminal provided in some embodiments of the present disclosure;
FIG. 11 is a schematic block diagram of a control terminal provided in some embodiments of the present disclosure;
FIG. 12 is a schematic diagram of a data processing method provided in some other embodiments of the present disclosure;
FIG. 13 is a schematic block diagram of an electronic system provided in some embodiments of the present disclosure;
FIG. 14 is a schematic flowchart of an information generation method provided in at least some embodiments of the present disclosure; and
FIG. 15 is a schematic diagram of a non-transitory computer-readable storage medium provided in at least some embodiments of the present disclosure.

### DETAILED DESCRIPTION

In order to make objects, technical details, and advantages of the embodiments of the present disclosure more apparent, the technical solutions of the embodiments of the present disclosure will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount, or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

In order to make the following description of the embodiments of the present disclosure clear and concise, the present disclosure omits detailed description of known functions and known components.

At present, a device based on FPV includes three parts: a first part is a mobile terminal integrated with a camera and a tripod head, the mobile terminal may be any device that can be controlled to move, such as a flight vehicle (e.g., an unmanned aerial vehicle (UAV)), a vehicle model, and a submarine model; a second part is a display terminal integrated with a remote controller, the display terminal may be a display device with a screen, such as a head-mounted display and a mobile phone; a third part is an image transmission system which is responsible for signal transmission between the mobile terminal and the display terminal.

At present, there have been some mature UAV products available on the market. However, there is no unified explicit standard referable for identity (ID) coding of UAVs and controllers (the above-mentioned signals transmitted between the mobile terminal and the display terminal include image information and ID coded information). A controller of each company and its corresponding UAV/FPV based UAV are bound. There is no universal controller capable of uniformly controlling a plurality of UAVs/FPV based UAVs and of transmitting and displaying images, that is, UAVs and controllers cannot be matched arbitrarily, causing resource waste and inconvenience in use and bringing about economic burden for users.

Control information and image information of a UAV are transmitted to a controller through two channels, respectively, and are finally synthesized at the controller. However, in a multi-UAV control scenario, there are the following problems: for example, the problem of the number of channels of the controller being limited, or the problem of a synchronization time delay between the control information and the image information (i.e., the control information and the image information are not synchronously transmitted to the controller). Moreover, in an angle-of-view switching scenario, there is also the problem of the synchronization time delay between the control information and the image information, thus causing the problems of lag, asynchronism of control and images, and the like.

At least one embodiment of the present disclosure provides a decoding method. The decoding method includes: parsing combined data that is received, where the combined data is data obtained by combining image data captured by a mobile terminal and mobile terminal information corresponding to the mobile terminal; and in response to obtaining, by the parsing, an extended data bit string corresponding to the mobile terminal information, parsing extended data encoding information corresponding to the mobile terminal information from the combined data, and decoding the extended data encoding information to obtain the mobile terminal information.

At least one embodiment of the present disclosure provides a data processing method. The data processing method is applied to a first mobile terminal and includes: obtaining image data captured by the first mobile terminal; generating mobile terminal information corresponding to the first mobile terminal; combining the image data and the mobile terminal information to obtain combined data; and transmitting the combined data to a control terminal.

In the embodiments of the present disclosure, the mobile terminal information and the image data are combined to obtain the combined data at the mobile terminal, and the combined data is simultaneously transmitted to the control terminal, moreover, it is guaranteed that the mobile terminal information and the image data are synchronously transmitted to the control terminal, thereby enhancing the user experience. The problem of the synchronization time delay of the mobile terminal information and the image data can be solved.

At least one embodiment of the present disclosure further provides an information generation method, a mobile terminal, a control terminal, an electronic system, and a non-transitory computer-readable storage medium.

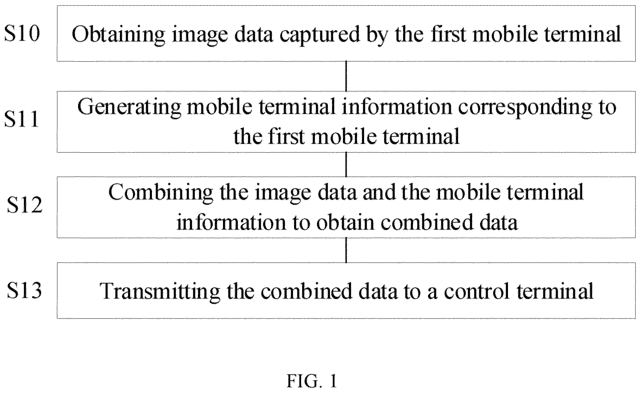

FIG. 1 is a schematic flowchart of a data processing method provided in at least one embodiment of the present disclosure.

In the embodiments of the present disclosure, the data processing method is applied to a first mobile terminal. The first mobile terminal may be various movable terminals (for example, the movable terminals can be controlled to move, and attitudes of the movable terminals can be controlled to change), fixed terminals (for example, the fixed terminals can be controlled to change their own attitudes), and the like, and the embodiments of the present disclosure do not limit this. An operating system of the first mobile terminal may be various systems such as Android system, IOS system, and HarmonyOS system.

For example, in some embodiments, the first mobile terminal may include an aero model, a vehicle model, a ship model, and the like, and the aero model may be a UAV or the like. In the embodiments of the present disclosure, the following description is made by taking for example that the first mobile terminal is a UAV.

As shown in FIG. 1, the data processing method may include the following step S10 to step S13.

Step S10: obtaining image data captured by the first mobile terminal.

Step S11: generating mobile terminal information corresponding to the first mobile terminal.

Step S12: combining the image data and the mobile terminal information to obtain combined data.

Step S13: transmitting the combined data to a control terminal.

For example, in some embodiments, step S13 may include: transmitting the combined data to the control terminal through a first image transmission channel. In the embodiments of the present disclosure, the combined data is simultaneously transmitted to the control terminal through the same image transmission channel, so that the transmission channels of the mobile terminal are reduced, the cost is saved, and it is ensured that the mobile terminal information and the image data are synchronously transmitted to the control terminal, thereby enhancing the user experience, and it can solve the problem that the number of the channels of the control terminal is limited in a multi-UAV control scenario and the problem of the synchronization time delay between the mobile terminal information and the image data.

For example, the combined data may be transmitted in the form of a bit stream, or may be transmitted in the form of a file.

For example, the way of transmitting the combined data is not limited to transmitting through the first image transmission channel, and in some embodiments, the combined data can also be transmitted by copying, a network, and the like. In the embodiments of the present disclosure, the following description is made by taking a case of transmitting the combined data to the control terminal through the first image transmission channel as an example.

For example, in step S10, the first mobile terminal may include an image collection module that may include a camera and the like. The image data is data captured by the camera. The image data may include a video, an image, and the like. The image data may further include an audio. The image data may be data captured by the camera in real time, or may be data captured by the camera and stored in the first mobile terminal.

For example, the first mobile terminal may automatically control the image collection module to capture to obtain the image data. For another example, the first mobile terminal may receive an instruction for capturing and controls, based on the instruction, the image collection module to start capturing to obtain the image data. The instruction may be transmitted to the first mobile terminal by means of the control terminal. For example, the instruction may be dispatched to the control terminal by the user by means of touch, language control, keyboard input, and the like.

For example, in some embodiments, step S11 may include: obtaining at least one first state parameter corresponding to the first mobile terminal; and generating, based on the at least one first state parameter, state information. For example, the mobile terminal information includes state information. The at least one first state parameter is used for indicating a state of the first mobile terminal and a condition of an environment where the first mobile terminal is located.

For example, the state information represents the state of the first mobile terminal when capturing the image data, thus enabling a user to know the state of the first mobile terminal when the image data is captured in real time. The image data and the state information are synchronous.

For example, the first mobile terminal may further include at least one sensor. In step S 11, obtaining at least one first state parameter corresponding to the first mobile terminal includes: collecting sensing data respectively corresponding to the at least one sensor to obtain at least one sensor sensing parameter, where the at least one first state parameter includes the at least one sensor sensing parameter.

For example, the at least one first state parameter includes at least one of the following parameters: an ambient light intensity, a vision parameter, a height, a power, a distance, an ambient temperature, and the like. For example, the sensors in the first mobile terminal may include a vision sensor, an illumination intensity sensor, a height sensor, a temperature sensor, a distance sensor, a sensor for detecting the electric quantity, and the like. The vision sensor may sense the environment surrounding the first mobile terminal to detect whether an obstacle is present. The sensing data of the vision sensor is the vision parameter. Based on the vision parameter, whether an obstacle is present around the first mobile terminal can be determined. The illumination intensity sensor may sense the intensity of ambient light to which the first mobile terminal is exposed, and the sensing data of the illumination intensity sensor is the ambient light intensity. The height sensor may sense a height of a position where the first mobile terminal is located (i.e., a distance between the position where the first mobile terminal is located and the ground or a reference plane), and the sensing data of the height sensor is the height. The temperature sensor may sense a temperature of an environment where the first mobile terminal is located, and the sensing data of the temperature sensor is the ambient temperature. For example, the distance sensor may sense a distance between the first mobile terminal and the control terminal, and the sensing data of the distance sensor is the distance. For another example, the distance sensor may also sense a moving distance of the first mobile terminal. For another example, the distance may represent a residual cruising range of the first mobile terminal.

For example, the sensors in the first mobile terminal may also include an acceleration sensor, a gyroscope sensor, a gravity sensor, an angular velocity sensor, a rotation vector sensor, a magnetic force sensor, a proximity sensor, a magnetic field sensor, a direction sensor, a geomagnetic rotation vector sensor, a pressure sensor, and the like, to meet different functions and application requirements of the first mobile terminal.

For example, in some embodiments, step S11 may further include: obtaining an information header and mobile terminal identity information corresponding to the first mobile terminal. The mobile terminal information further includes the information header and the mobile terminal identity information. The information header and the mobile terminal identity information are used for identifying the first mobile terminal, in other words, the control terminal can uniquely determine one mobile terminal by parsing the information header and the mobile terminal identity information in the received mobile terminal information. To allow for more standardized and normalized FPV market in the future, in the embodiments of the present disclosure, the mobile terminal information of different mobile terminals is obtained by encoding based on an ID coding standard suitable for FPV. The mobile terminal information may include an information header and mobile terminal identity information to uniquely identify a mobile terminal, so that the same control terminal can identify mobile terminals of different companies, thus implementing that the same control terminal can perform unified control and video transmission display for a plurality of different mobile terminals, which is conducive to the FPV market toward to standardization and normalization.

For example, the information header may include at least one of the following information: copyright information, encryption information, a product category code corresponding to the first mobile terminal, a company code corresponding to the first mobile terminal, and the like. In the embodiments of the present disclosure, the following description is made by taking a case that the information header in the mobile terminal information includes the copyright information, the encryption information, the product category code corresponding to the first mobile terminal, and the company code corresponding to the first mobile terminal as an example.

For example, the copyright information may represent information of a copyright owner of a coding rule used for coding the mobile terminal information. For another example, the copyright information may also represent information of a copyright owner of the image data in the combined data. The copyright information may be uniformly distributed by the copyright registration authority.

For example, the encryption information can include a key identifier, an encryption mode, an encryption range, and the like. The key identifier is used for representing the key pairing between the first mobile terminal and the control terminal. For example, the key identifier may uniquely correspond to a pair of mobile terminal and control terminal. For example, key identifiers in the mobile terminal information sent by each mobile terminal to different control terminals may be different. For another example, the key identifier may uniquely correspond to a mobile terminal, i.e., the key identifiers in the mobile terminal information of different mobile terminals are different. The encryption range can represent a range of the encrypted information. For example, the encrypted information may include the mobile terminal identity information and the state information. The encryption mode represents an encryption algorithm mode used.

For example, both of the product category code and the company code corresponding to the first mobile terminal can be uniformly distributed or uniformly preset in advance by a particular organization.

For example, the mobile terminal identity information includes application identity identification information, module identification information, and the like. An application identity identification code includes a product brand code of a manufacturer that manufactures the first mobile terminal, a field and type code corresponding to an application field to which the first mobile terminal belongs, a frequency band code corresponding to an operating frequency band corresponding to the first mobile terminal, and a channel code corresponding to an operating channel corresponding to the first mobile terminal. The module identification information represents a production number corresponding to the first mobile terminal. For example, in some embodiments, the production number corresponding to the first mobile terminal may include information such as a code of origin corresponding to the place of origin where the first mobile terminal is manufactured, and a production date code corresponding to the production date when the first mobile terminal is manufactured, in which case more bits may be set to represent the production number. In some other embodiments, the application identity identification code further includes the code of origin corresponding to the place of origin where the first mobile terminal is manufactured and the production date code corresponding to the production date when the first mobile terminal is manufactured, in which case the production number may not include the code of origin and the production date code. In the following embodiments of the present disclosure, the following description is made by taking a case that the application identity identification code includes the code of origin and the production date code as an example.

For example, the product brand code of the manufacturer that manufactures the first mobile terminal and the field and type code corresponding to the application field to which the first mobile terminal belongs can be combined to represent a product model of the first mobile terminal.

Table 1 shows an example of a kind of mobile terminal information provided in the embodiments of the present disclosure. The mobile terminal information obtained by coding based on the ID coding standard suitable for FPV is described in detail below in combination with Table 1.

**Table 1**

| | Coding Item | Occupy | Instance | Binary Coding |
|---|---|---|---|---|
| Information Header | Copyright Information | 8 bits | XX Company | 0000 0001 |
| | Encryption Information | 18 bits | Key identifier + encryption mode + encryption range | 01 0110 1000 0000 0110 |
| | Product Category Code | 18 bits | FPV-mobile terminal | 0 0000 0000 0000 0001 0 |
| | Company Code | 26 bits | XX Company | 00 0000 0000 0000 0000 0000 1000 |
| Mobile Terminal Identity Information | Application Identity Identification Information | 56 bits | UAV (0x 0049028556161C) | 00 0000 0100 1001 0000 0010 1000 0101 0101 0110 0001 0110 0001 1100 |
| | Module Identification Information | 28 bits | 0x 0000001 | 0000 0000 0000 0000 0000 0000 0001 |
| State Information | First State Parameter | 42 bits | 0x 100D9003F0A | 01 0000 0000 1101 1001 0000 0000 0011 1111 0000 1010 |

It needs to be noted that in Table 1, "0x" represents hexadecimal data.

For example, the mobile terminal information may include three parts: information header, mobile terminal identity information, and state information. The state information is used for implementing interaction between the first mobile terminal and the control terminal.

Referring to Table 1, the information header (Header) includes the copyright information (copyright_id), the encryption information (encryption _id), the product category code (product_category_id), and the company code (company _id). The information header is represented using 70 bits.

The copyright information is used for representing a code of a copyright owner. The copyright owner may be a company, for example, XX company shown in Table 1 (e.g., BOE Technology Group Co., Ltd. (BOE)), the copyright information may be represented using 8 bits. The copyright information is uniformly distributed by the copyright registration authority, and "00000000" represents no copyright information.

The encryption information may be represented using 18 bits. The encryption information includes the key identifier, the encryption mode, and the encryption range. The key identifier is represented using 8 bits, and the key identifier is used for representing the key pairing between the first mobile terminal and the control terminal. The encryption mode is represented using 8 bits, and the encryption mode represents the encryption algorithm mode used. The encryption range is represented using 2 bits. Of the 2 bits, one bit is used for representing whether the mobile terminal identity information is encrypted, that is, when the one bit has a value of 1, it represents that the mobile terminal identity information is encrypted; and when the one bit has a value of 0, it represents that the mobile terminal identity information is not encrypted. The other bit of the 2 bits represents whether the state information is encrypted, that is, when the other bit has a value of 1, it represents that the state information is encrypted; and when the other bit has a value of 0, it represents that the state information is not encrypted.

The product category code may be represented using 18 bits, thus guaranteeing that the product category code can satisfy all existing product categories in the world. As shown in Table 1, the product category code may be "FPV-mobile terminal", i.e., a mobile terminal based on the FPV technology. The binary representation of the product category code is 0 0000 0000 0000 0001 0.

The company code may be represented using 26 bits, thus guaranteeing that the company code can satisfy the number of existing companies in the world. The company code may represent a code of a company (e.g., XX company shown in Table 1). For example, for BOE, its corresponding company code is 8, and the binary representation of the corresponding company code is 00 0000 0000 0000 0000 0000 1000.

Referring to Table 1, the mobile terminal identity information (Identity) includes the application identity identification information (application_id) and the module identification information (generation_id). The mobile terminal identity information is represented using 84 bits, where the application identity identification information is represented using 56 bits, and the module identification information is represented using 28 bits.

The application identity identification information may include a product brand code, a field and type code, a code of origin, a production date code, and a frequency band and channel code. One example shown in Table 1 is an Unmanned Aerial Vehicle (UAV), and the application identity identification information corresponding to the UAV is 0x 0049028556161C.

The product brand code may be represented using 8 bits. For example, there are about more than 20 UAV manufacturers at present.

The field and type code may be represented using 7 bits, and the 7 bits may include 3 bits for representing a field and 4 bits for representing a type. For example, the application field of the FPV UAVs may include UAVs, unmanned vehicles, unmanned submarines, and the like; and the types of the UAVs may include racing, aerial photography, plant protection, security, inspection, film and television shooting, and the like.

The code of origin can be represented using 6 bits. The places of production of UAVs may include Shenzhen, Zhumadian, Chengdu, etc. There are about more than 20 places of production of UAVs at present.

The production year-month code can be represented using 11 bits.

The frequency band and channel code may be represented using 24 bits. The 24 bits may include 8 bits for representing a frequency band and 14 bits for representing a channel. The frequency band may include 2.4 gigahertz (GHz), 5.8 GHz, and the like. If according to Federal Communications Commission (FCC) certification standards, the frequency band of 5.8 GHz may be subdivided into 8 channels. The 8 channels are 5660, 5695, 5735, 5770, 5805, 5878, 5914, and 5839, respectively. It needs to be noted that the remaining 2 bits of the 24 bits may be used as reserved bytes, which, in practical use, may be specifically set as needed.

The module identification information is represented using 28 bits to guarantee that the module identification information can satisfy the output demand of UAVs. As shown in Table 1, one example of the module identification information is 0x 0000001.

Referring to Table 1, the state information may be represented using 42 bits. For example, one example of the state information is 0x 100D9003F0A. The state information may include an ambient light intensity, a vision parameter, a height, a power, a distance, and an ambient temperature.

If the first mobile terminal is a UAV, the vision parameter is used for representing whether an obstacle is present around the UAV, and may be represented using 1 bit. When the 1 bit has a value of 0, it represents that there is no obstacle; and when the 1 bit has a value of 1, it represents that there is an obstacle.

The ambient light intensity may be represented by using 1 bit, and is used for representing a light intensity in an environment where the UAV is located. A threshold of the ambient light intensity may be set according to an actual situation. For example, the threshold may be 15 lux. When the 1 bit for representing the ambient light intensity has a value of 1, it represents that the ambient light intensity is below the threshold, thus prompting the user to turn on a fill-in light to supplement light. When the 1 bit for representing the ambient light intensity has a value of 0, it represents that the ambient light intensity is above or equal to the threshold, in which case no operation may be performed.

If the first mobile terminal is a UAV, the height represents a flight height which may be represented using 11 bits. The flight height ranges from 0 to 2 kilometers (km). A threshold of the flight height can be determined according to a specific flight area. For example, the threshold may be a flight area height limit of the flight area. For example, the flight area height limit may be 120 meters (m). When the flight height is greater than the flight area height limit, a vibrating alert can be given, thus prompting the user to control the UAV to reduce the flight height of the UAV.

If the first mobile terminal is a UAV, the power represents UAV power (UAV battery charge) which may be represented using 7 bits. The UAV power can be represented in percentage. The UAV power ranges from 0 to 100%.

If the first mobile terminal is a UAV, the distance may represent a flight distance. The flight distance may be represented using 15 bits. A range of the flight distance may be set according to an actual situation, e.g., 0 to 20 km. In combination with the UAV power and the flight distance, a returning risk of the UAV is estimated and a warning is given, thus allowing the user to perform a corresponding operation according to the warning and avoiding cases such as loss of the UAV.

The ambient temperature may be represented using 7 bits. A temperature range of the ambient temperature may be set according to an actual situation, e.g., -10 degrees Celsius (°C) to 40°C. The first one (i.e., the first bit) of the 7 bits is a sign bit. If the ambient temperature exceeds the temperature range, an early warning prompt can be given, thus allowing the user to perform a corresponding operation according to the early warning prompt and avoiding the UAV from being damaged.

For example, in some embodiments, step S11 may further include: determining that any first state parameter of the at least one first state parameter does not meet a state condition corresponding to the any first state parameter, generating alerting information. For example, the mobile terminal information further includes the alerting information, and the alerting information is used for informing the control terminal of the first mobile terminal being in an abnormal state.

For example, the first mobile terminal being in the abnormal state may represent cases such as the ambient temperature of the environment where the first mobile terminal is located is beyond the temperature range, the flight height of the first mobile terminal is higher than the threshold of the flight height, the power of the first mobile terminal is too low and a return needs to be made, and an obstacle is present around the first mobile terminal.

For example, if the any first state parameter is the ambient temperature, the state condition corresponding to the ambient temperature may be the ambient temperature falling within the temperature range. Thus, if the ambient temperature of the environment where the first mobile terminal is located exceeds the temperature range corresponding to the ambient temperature (e.g., the ambient temperature is higher than an upper limit of the temperature range or the ambient temperature is lower than a lower limit of the temperature range), the alerting information may be generated, the alerting information indicates that the ambient temperature of the environment where the first mobile terminal is located exceeds the temperature range, so that when the control terminal receives the mobile terminal information including the alerting information, the control terminal parses the mobile terminal information to obtain the alerting information. Then, based on the alerting information, the control terminal may send a corresponding control instruction to the first mobile terminal to control the first mobile terminal to move away from the current location until the ambient temperature of the environment where the first mobile terminal is located falls within the temperature range.

For example, in the case that the first mobile terminal is a UAV, if the any first state parameter is the flight height, the state condition corresponding to the flight height may be the flight height exceeding the flight area height limit of the flight area where the first mobile terminal is located. Thus, if the flight height of the first mobile terminal exceeds the flight area height limit of the flight area, the alerting information may be generated, the alerting information indicates that the flight height of the first mobile terminal exceeds the flight area height limit of the flight area, so that when the control terminal receives the mobile terminal information including the alerting information, the control terminal parses the mobile terminal information to obtain the alerting information. Then, based on the alerting information, the control terminal may send a corresponding control instruction to the first mobile terminal to control the first mobile terminal to move, e.g., control the first mobile terminal to descend, until the flight height of the first mobile terminal is below the flight area height limit of the flight area.

It needs to be noted that the control instruction may be dispatched by the user to the control terminal, or the control instruction may also be automatically generated by the control terminal based on the alerting information.

For example, the alerting information may indicate that the plurality of first state parameters all do not meet the corresponding state conditions. For example, in the case that the first mobile terminal is a UAV, the alerting information may indicate that the ambient temperature of the environment where the first mobile terminal is located goes beyond the temperature range corresponding to the ambient temperature and the flight height of the first mobile terminal exceeds the flight area height limit of the flight area. The number of bits for representing the alerting information may be set according to an actual situation, which will not be particularly limited in the embodiments of the present disclosure.

For example, in some embodiments, step S11 may further include: in response to generating the alerting information, generating mobile terminal control information; performing an operation corresponding to the mobile terminal control information under the control of the mobile terminal control information; and in response to performing the operation corresponding to the mobile terminal control information under the control of the mobile terminal control information, generating notification information.

For example, the mobile terminal information further includes the notification information which is used for informing the control terminal of the first mobile terminal having performed the operation corresponding to the mobile terminal control information. In the embodiments of the present disclosure, the first mobile terminal may generate, based on the alerting information, the mobile terminal control information for controlling the first mobile terminal itself, thus avoiding a case in which the first mobile terminal is damaged or disorientates because the control instruction from the control terminal is not sent in time, and moreover, the edge computing capability of the first mobile terminal may further be utilized effectively.

For example, in some embodiments, if the alerting information indicates that the flight height exceeds the flight area height limit of the flight area, the first mobile terminal may generate the mobile terminal control information, and then, the first mobile terminal moves under the control of the mobile terminal control information such that the flight height of the first mobile terminal is below the flight area height limit of the flight area. After the first mobile terminal moves based on the mobile terminal control information to reduce the flight height, the notification information can be generated, and the notification information can indicate that the first mobile terminal has moved to reduce the flight height. For example, after the first mobile terminal moves based on the mobile terminal control information, if the flight height of the first mobile terminal is below the flight area height limit of the flight area, the notification information can further inform the control terminal that the flight height of the first mobile terminal has been below the flight area height limit of the flight area, so that it can be avoided that the control terminal sends the control instruction for controlling the first mobile terminal again.

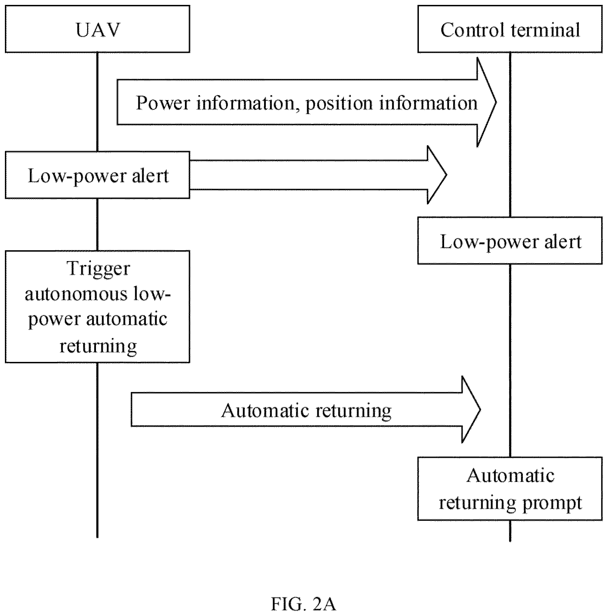

FIG. 2A is a schematic diagram of a low-power automatic returning scenario provided in some embodiments of the present disclosure.

FIG. 2A is described by taking for example that the first mobile terminal is a UAV. As shown in FIG. 2A, the UAV may transmit the mobile terminal information to the control terminal. The mobile terminal information may include power information and position information. The power information may include the UAV power mentioned above, and the position information may include information such as the flight distance mentioned above. For example, when the current power (determined based on the power information) of the UAV is at a returning power threshold, the UAV can trigger the autonomous low-power (low-battery) automatic returning function and automatically return, that is, at this time, the UAV may generate the mobile terminal control information indicating automatic returning, and under the control of the mobile terminal control information, the UAV starts to automatically return to the position where the control terminal is located. After the UAV automatically returns home, the notification information can be generated and is used for indicating that the UAV has automatically returned home. For example, the notification information can include an automatic returning prompt.

For example, as shown in FIG. 2A, when the current power of the UAV is at the returning power threshold, the UAV transmits the information of a low-power alert to the control terminal. When the control terminal receives the information of the low-power alert, the control terminal may perform a corresponding operation. For example, if the notification information received by the control terminal indicates that the UAV does not automatically return, the control terminal can issue an instruction for controlling the UAV to return. If the notification information received by the control terminal indicates that the UAV has automatically returned, the control terminal may not issue an instruction for controlling the UAV to return.

It needs to be noted that the UAV may determine, based on the position information, the returning power required by the UAV flying back to the position of the control terminal. Based on the returning power, a returning power threshold corresponding to the current position of the UAV can be determined. For example, the returning power threshold may be N times of the returning power, and N is greater than 1 and can be set according to an actual situation. For example, N may be 1.1∼1.3, etc.

For example, in some embodiments, step S11 can further include: receiving at least one second state parameter transmitted from a second mobile terminal and corresponding to the second mobile terminal; determining, based on the at least one first state parameter and the at least one second state parameter, a relative state between the first mobile terminal and the second mobile terminal; and generating, based on the relative state, control suggestion information.

For example, the mobile terminal information further includes the control suggestion information, and the control suggestion information indicates suggesting the control terminal to perform an operation corresponding to the control suggestion information. In the embodiments of the present disclosure, different mobile terminals (e.g., the first mobile terminal and the second mobile terminal) can communicate with each other to implement machine-to-machine communications. The edge computing capability of each mobile terminal is effectively utilized and machine-to-machine interactivity is enhanced, so that the mobile terminal can be more intelligent. Meanwhile, the computational load of the control terminal can also be effectively alleviated and the user experience can be enhanced.

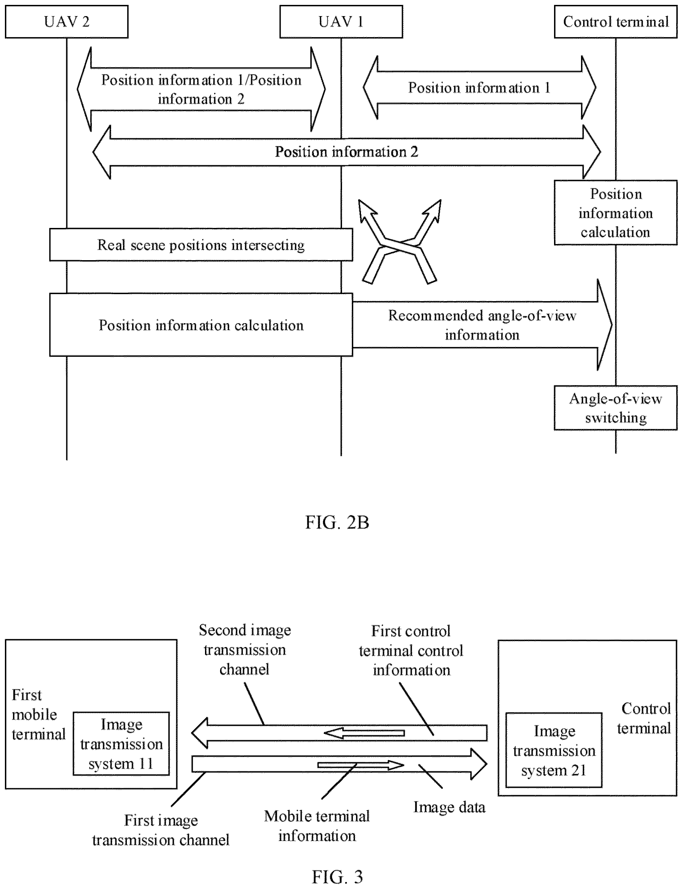

FIG. 2B is a schematic diagram of a double-UAV angle-of-view switching scenario provided in some embodiments of the present disclosure.

FIG. 2B is described by taking for example that the first mobile terminal is UAV 1 and the second mobile terminal is UAV 2. As shown in FIG. 2B, the UAV 1 may transmit the mobile terminal information corresponding to the UAV 1 to the control terminal, and the mobile terminal information corresponding to the UAV 1 may include position information 1. The UAV 2 may transmit the mobile terminal information corresponding to the UAV 2 to the control terminal, and the mobile terminal information corresponding to the UAV 2 may include position information 2. The control terminal may perform position information calculation based on the position information 1 and the position information 2 to determine a relative position between the UAV 1 and the UAV 2 (the relative state may include the relative position). When the real scene positions of the UAV 1 and the UAV 2 intersect, the control terminal can perform an angle-of-view switching operation.

Moreover, in one embodiment, the UAV 2 can send the position information 2 corresponding to the UAV 2 to the UAV 1. The UAV 1 then performs the position information calculation based on its own position information 1 and the position information 2, thereby determining the relative position between the UAV 1 and the UAV 2. When the real scene positions of the UAV 1 and the UAV 2 intersect, the UAV 1 can generate the control suggestion information and send the control suggestion information to the control terminal. The control suggestion information can include recommended angle-of-view information so that the control terminal can perform the angle-of-view switching operation based on the recommended angle-of-view information. In another embodiment, the UAV 1 can send the position information 1 corresponding to the UAV 1 to the UAV 2. The UAV 2 can then perform the position information calculation based on its own position information 2 and the position information 1, thereby determining the relative position between the UAV 1 and the UAV 2. When the real scene positions of the UAV 1 and the UAV 2 intersect, the UAV 2 can generate the control suggestion information and send the control suggestion information to the control terminal. The control suggestion information can include recommended angle-of-view information so that the control terminal can perform the angle-of-view switching operation based on the recommended angle-of-view information.

It needs to be noted that "real scene positions intersecting" can represent that the actual relative position between the UAV 1 and the UAV 2 changes. For example, in one embodiment, the UAV 1 is located on the left side of the UAV 2 and the UAV 2 is located on the right side of the UAV 1. When the movements of the UAV 1 and the UAV 2 result in the UAV 1 moving to the right side of the UAV 2, at this time, the position of the UAV 1 relative to the UAV 2 changes, that is, the UAV 1 is located on the right side of the UAV 2 and the UAV 2 is located on the left side of the UAV 1. For another example, in one embodiment, the UAV 1 is located above the UAV 2 and the UAV 2 is located below the UAV 1. When the movements of the UAV 1 and the UAV 2 result in the UAV 1 moving to be below the UAV 2, at this time, the position of the UAV 1 relative to the UAV 2 changes, that is, the UAV 1 is located below the UAV 2 and the UAV 2 is located above the UAV 1.

For example, the angle-of-view switching operation can represent switching positions of the image data captured by the UAV 1 and the image data captured by the UAV 2 that are displayed on the display screen of the control terminal. For example, when the UAV 1 is located on the left side of the UAV 2, in the display screen, the region for displaying the image data captured by the UAV 1 is located on the left side of the region for displaying the image data captured by the UAV 2. When the real scene positions of the UAV 1 and the UAV 2 intersect, i.e., the UAV 1 moves to the right side of the UAV 2, a display viewing angle of the display screen needs to be switched, i.e., the region for displaying the image data captured by the UAV 1 and the region for displaying the image data captured by the UAV 2 are switched such that the region for displaying the image data captured by the UAV 1 is located on the right side of the region for displaying the image data captured by the UAV 2, so that the position of the displayed image data corresponds to the real scene position. In this way, it is convenient for the user to know the situation of the real scene more intuitively and the user experience is enhanced.

For example, in step S12, the image data and the mobile terminal information may be combined by any suitable method. For example, in some embodiments, the image data can be coded based on an AVS3 coding standard. An extension data definition item corresponding to the mobile terminal information is added in the AVS3 coding standard to indicate the coding rule of the mobile terminal information. Thus, the image data and the mobile terminal information may be coded simultaneously based on the AVS3 coding standard added with the related extension data definition item to implement combining the image data and the mobile terminal information.

FIG. 3 is a schematic diagram of information transmission between a first mobile terminal and a control terminal provided in some embodiments of the present disclosure.

For example, as shown in FIG. 3, the first mobile terminal includes an image transmission system 11, and the control terminal includes an image transmission system 21. The image transmission system 11 and the image transmission system 21 are configured to implement information transmission between the first mobile terminal and the control terminal. In step S13, the combined data formed by combining the image data and the mobile terminal information is transmitted to the control terminal through the first image transmission channel. It needs to be noted that in some embodiments, the mobile terminal information can further include a control response.

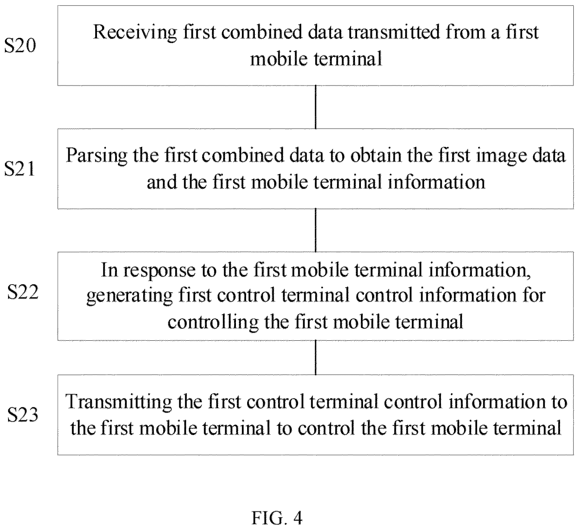

At least one embodiment of the present disclosure further provides a data processing method. FIG. 4 is a schematic flowchart of a data processing method provided in some embodiments of the present disclosure.

For example, the data processing method provided in the embodiments of the present disclosure can be applied to a control terminal. The control terminal can be used to control at least one mobile terminal (e.g., a first mobile terminal and a second mobile terminal to be described below) to allow the at least one mobile terminal to implement corresponding functions.

In the embodiments of the present disclosure, the mobile terminal simultaneously transmits the combined data to the control terminal through the same image transmission channel, thus reducing the number of the transmission channels of the mobile terminal, saving the cost, ensuring that the control terminal receives the mobile terminal information and the image data at the same time, and enhancing the user experience. The problem that the number of the channels of the control terminal is limited in a multi-UAV control scenario and the problem of the synchronization time delay between the mobile terminal information and the image data can be solved.

As shown in FIG. 4, in some embodiments, the data processing method can include the following step S20 to step S23.

As shown in FIG. 4, step S20: receiving first combined data transmitted from a first mobile terminal. For example, the first combined data can be transmitted by the first mobile terminal to the control terminal through a first image transmission channel, the first combined data is data obtained by combining first image data captured by the first mobile terminal and first mobile terminal information corresponding to the first mobile terminal. For example, the first mobile terminal may be the first mobile terminal in the embodiment of the above-mentioned data processing method, the first combined data may be the combined data in the embodiment of the above-mentioned data processing method, the first image data may be the image data in the embodiment of the above-mentioned data processing method, and the first mobile terminal information may be the mobile terminal information in the embodiment of the above-mentioned data processing method. The repeated contents will not be described here redundantly.

As shown in FIG. 4, step S21: parsing the first combined data to obtain the first image data and the first mobile terminal information. For example, the first image data is used for displaying.

For example, in some embodiments, the control terminal can include a display screen. The display screen can be an organic light emitting diode (OLED) display screen, a light emitting diode (LED) display screen, or a liquid crystal display (LCD) display screen, etc.

For example, the data processing method further includes: displaying the first image data on the display screen.

As shown in FIG. 4, step S22: in response to the first mobile terminal information, generating first control terminal control information for controlling the first mobile terminal.

For example, the first control terminal control information can include an information header, control terminal identity information, and control interaction information. The information header and the control terminal identity information can be used for identifying the control terminal, in other words, the first mobile terminal can uniquely determine one control terminal by parsing the information header and the control terminal identity information in the received first control terminal control information. Thus, the mobile terminal and the control terminal can identify the identities of each other and achieve mutual control. Meanwhile, the operation processes can be simplified, and the control operation of the control terminal is caused to be more flexible and changeable.

In the embodiments of the present disclosure, the control terminal control information of different control terminals is obtained by coding based on the ID coding standard suitable for FPV. The control terminal control information can include an information header and control terminal identity information to uniquely identify a control terminal, so that the same mobile terminal can identify control terminals of different companies, thus achieving that the same mobile terminal can be controlled by different control terminals, and at the same time, achieving that the same control terminal can control different mobile terminals. Therefore, arbitrary matching between a mobile terminal and a control terminal can be implemented, the economic burden of the user is reduced, the user experience is enhanced, and it is conducive to standardization and normalization of the FPV market.

For example, in the first control terminal control information, the information header includes at least one of the following information: copyright information, encryption information, a product category code corresponding to the control terminal, a company code corresponding to the control terminal, and the like. In the embodiments of the present disclosure, the following description is made by taking a case that the information header in the first control terminal control information includes the copyright information, the encryption information, the product category code corresponding to the control terminal, and the company code corresponding to the control terminal as an example.

For example, the copyright information can represent information of a copyright owner of a coding rule for implementing coding the first control terminal control information. The copyright information may be uniformly distributed by the copyright registration authority.

For example, the encryption information can include a key identifier, an encryption mode, an encryption range, and the like. The key identifier is used for representing a key pairing between the first mobile terminal and the control terminal. The key identifier may uniquely correspond to a pair of mobile terminal and control terminal. For example, key identifiers in the control terminal control information sent by each control terminal to different mobile terminals may be different. The encryption range can represent a range of the encrypted information. For example, the encrypted information can include the control terminal identity information and the control interaction information. For example, the encryption information can be determined based on the first mobile terminal information. For example, the encryption information of the first control terminal control information and the encryption information of the first mobile terminal information may be identical, thus guaranteeing the accuracy and security of information transmission. For example, different mobile terminals can have different encryption information, thus avoiding the case in which other mobile terminals are mistakenly controlled when the first control terminal control information is transmitted to other mobile terminals than the first mobile terminal. The encryption mode represents the encryption algorithm mode used.

For example, both of the product category code and the company code corresponding to the control terminal can be uniformly distributed or uniformly preset in advance by the particular organization.

For example, the control terminal identity information includes application identity identification information, module identification information, and the like. The application identity identification code includes a product brand code corresponding to a manufacturer that manufactures the control terminal, a field and type code corresponding to an application field to which the control terminal belongs, and a frequency band code corresponding to an operating frequency band that corresponds to the control terminal. The module identification information represents a production number corresponding to the control terminal.

For example, in some embodiments, the production number corresponding to the control terminal can include information such as a code of origin corresponding to the place of origin where the control terminal is manufactured, and a production date code corresponding to the production date when the control terminal is manufactured, in this case, more bits may be set to represent the production number. In some other embodiments, the application identity identification code further includes the code of origin corresponding to the place of origin where the control terminal is manufactured and the production date code corresponding to the production date when the control terminal is manufactured, in this case, the production number may not include the code of origin and the production date code. In the following embodiments of the present disclosure, the following description is made by taking for example that the application identity identification code includes the code of origin and the production date code.

For example, the product brand code corresponding to the manufacturer that manufactures the control terminal and the field and type code corresponding to the application field to which the control terminal belongs can be combined to represent a product model of the control terminal.

For example, the control interaction information includes at least one of the following information: control mode information, mobile terminal identification information for indicating the first mobile terminal, transmission channel information, state control information, state mode information, shooting information, lighting information, and angle information. The state control information is used for controlling the motion and the attitude of the first mobile terminal.

Table 2 shows an example of a kind of the first control terminal control information provided in the embodiments of the present disclosure. The first control terminal control information coded based on the ID coding standard suitable for FPV is described in detail below in combination with Table 2.

**Table 2**

| | Coding Item | Occupy | Instance | Binary Coding |
|---|---|---|---|---|
| Information Header | Copyright Information | 8 bits | XX Company | 0000 0001 |
| | Encryption Information | 18 bits | Key identifier + encryption mode + encryption range | 01 0110 1000 0000 0110 |
| | Product Category Code | 18 bits | FPV-display terminal | 0 0000 0000 0000 0001 1 |
| | Company Code | 26 bits | XX Company | 00 0000 0000 0000 0000 0000 1000 |
| Control Terminal Identity Information | Application Identity Identification Information | 46 bits | LCD (0x 02050D921558) | 00 0010 0000 0101 0000 1101 1001 0010 0001 0101 0101 1000 |
| | Module Identification Information | 38 bits | 0x 000000000000001 | 00 0000 0000 0000 0000 0000 0000 0000 0000 0001 |
| Control interaction information | Control parameter | 32 bits | 0x 10884613 | 0001 0000 1000 1000 0100 0110 0001 0011 |

It should be noted that in Table 2, "0x" represents hexadecimal data.

For example, the first control terminal control information can include three parts: information header, control terminal identity information, and control interaction information. The control interaction information is used for implementing interaction between the first mobile terminal and the control terminal.

Referring to Table 2, the information header (Header) includes the copyright information (copyright_id), the encryption information (encryption_id), the product category code (product_category_id), and the company code (company_id). The information header is represented using 70 bits. It needs to be noted that the information header in the first control terminal control information is similar to the information header in the mobile terminal information, with a difference that the information header in the mobile terminal information is used for representing the information related to the first mobile terminal while the information header in the first control terminal control information is used for representing the information related to the control terminal. For example, as shown in Table 2, the product category code in the first control terminal control information can be "FPV-display terminal", and its binary representation is 0 0000 0000 0000 0001 1. For the detailed description of the information header in the first control terminal control information, a reference may be made to the related description of the information header in the mobile terminal information, which will not be redundantly described here.

Referring to Table 2, the control terminal identity information (Identity) includes the application identity identification information (application_id) and the module identification information (generation_id). The control terminal identity information is represented using 84 bits, where the application identity identification information is represented using 46 bits, and the module identification information is represented using 38 bits.

For example, the application identity identification information can include a product brand code, a field and type code, a code of origin, a production date code, and a frequency band code. One example shown in Table 2 is that the display screen of the control terminal is the LCD display screen, and the application identity identification information is 0x 02050D921558.

The product brand code can be represented using 8 bits. For example, the product brand code can represent the manufacturer of the display screen of the control terminal, for example, there are more than 50 manufacturers of LCD liquid crystal modules at present.

The field and type code can be represented using 12 bits. For example, the field and type code can represent a type and a size of the display screen of the control terminal. The 12 bits can include 4 bits for representing the type and 8 bits for representing the size. For example, the display screen has types of LCD, Organic Light-Emitting Diode (OLED), Quantum Dots-LCD (QD-LCD), Mini-LED, Micro-LED, Quantum Dot Light Emitting Diode (QLED), and the like. For example, the LCD may be in a plurality of sizes, such as 15 Inch and 17 Inch.

The code of origin can be represented using 7 bits. For example, at present, the places of production for the LCD include Beijing, Hefei, Chengdu, Ordos, and the like.

The production year-month code can be represented using 11 bits.

The frequency band code can be represented using 8 bits, and common frequency bands include 2.4 GHz, 5.8 GHz, and the like.

The module identification information is represented using 38 bits to guarantee that the module identification information can satisfy the output demand of display screens.

Referring to Table 2, the control interaction information can be represented using 32 bits. For example, one example of the control interaction information is 0x 10884613. The control interaction information can include the following control parameters: control mode information, mobile terminal identification information, transmission channel information, state control information, state mode information, shooting information, lighting information, and angle information.

For example, the control mode information can be represented using 4 bits to meet the requirements of different control modes. The control mode information is used for representing a control mode of the control terminal for a mobile terminal, such as one-to-one control or one-to-many control, the one-to-one control indicates one control terminal controlling one mobile terminal, and the one-to-many control indicates one control terminal controlling a plurality of mobile terminals.

For example, the one-to-many control may be one-to-two control. When the control mode information indicates one-to-two control, it represents that one control terminal controls two mobile terminals (e.g., two UAVs) simultaneously. By adjusting the viewing angle of a tripod head, it can be achieved that pictures captured by two mobile terminals at two different viewing angles can be viewed simultaneously. Moreover, it can be achieved that two mobile terminals monitor each other, and pictures captured by the mobile terminals from two viewing angles can also be fused by an algorithm to achieve the virtual reality (VR) effect and the like.

For example, the one-to-many control may be one-to-eight control. When the control mode information indicates one-to-eight control, it represents that one control terminal controls eight mobile terminals (e.g., eight UAVs) simultaneously. Pictures captured by eight mobile terminals at eight different viewing angles can be viewed simultaneously, and a formation show can also be made (e.g., a UAV formation show), etc.

For example, the transmission channel information (an image transmission channel) can be represented using 5 bits. At present, under the FCC certification standard, a UAV supports at most 8 communication channels, i.e., it can be implemented that 8 UAVs fly simultaneously. In consideration of supporting more frequency bands in the future, the transmission channel information is represented using 5 bits to satisfy follow-up development.

For example, the mobile terminal identification information (mobile terminal ID) can be represented using 4 bits.

For example, the state mode information can be represented using 3 bits. For example, if the first mobile terminal is a UAV, the state mode information can represent a flight mode of the UAV. The flight modes of the UAV can include a GPS mode, an attitude mode, a motion mode, a manual mode, and the like.

For example, the shooting information can be represented using 2 bits. One bit (1 bit) of the 2 bits is used for indicating whether to photograph (P). When the 1 bit has a value of 0, it represents not photographing; and when the 1 bit has a value of 1, it represents photographing. The other bit (1 bit) of the 2 bits is used for indicating whether to record a video (V). When the 1 bit has a value of 0, it represents not recording a video; and when the 1 bit has a value of 1, it represents recording a video.

For example, the lighting information can be represented using 2 bits. One bit (1 bit) of the 2 bits is used for indicating whether to enable a night vision (N) function. When the 1 bit has a value of 0, it represents not enabling the night vision function; and when the 1 bit has a value of 1, it represents enabling the night vision function. The other bit (1 bit) of the 2 bits is used for indicating whether to enable a downward-facing supplementary light function. When the 1 bit has a value of 0, it represents not enabling the downward-facing supplementary light function; and when the 1 bit has a value of 1, it represents enabling the downward-facing supplementary light function.

For example, the angle information can be represented using 2 bits. The angle information can be used for indicating setting a pitch angle of the tripod head, e.g., elevating, lowering, maintaining, or the like. One bit (1 bit) of the 2 bits is used for indicating elevating, and the other bit (1 bit) of the 2 bits is used for indicating lowering. When the 2 bits are both 00, it represents maintaining. A pitch angle range of the tripod head can be defined according to an actual situation. If the pitch angle of the tripod head goes beyond the pitch angle range, a vibration alert is given. For example, in some embodiments, the pitch angle range may be -40° to 60°.

For example, the state control information can be represented using 10 bits.

Among the 10 bits, 1 bit represents intelligent return home (R); when the 1 bit has a value of 1, it represents returning; and when the 1 bit has a value of 0, it represents not returning.

Among the 10 bits, 1 bit represents emergency hovering (T); when the 1 bit has a value of 1, it represents hovering; and when the 1 bit has a value of 0, it represents not hovering.

Among the 10 bits, 4 bits represent that the first mobile terminal moves in a first plane. For example, the 4 bits represent an operation by a left knob of a UAV. Of the 4 bits, 1 bit represents ascending in the first plane (e.g., when the 1 bit has a value of 0, it represents not ascending, and when the 1 bit has a value of 1, it represents ascending); 1 bit represents descending in the first plane (e.g., when the 1 bit has a value of 0, it represents not descending, and when the 1 bit has a value of 1, it represents descending); 1 bit represents a symbol bit left/right (e.g., when the 1 bit has a value 0, it represents left yaw, and when 1 bit has a value 1, it represents right yaw); and 1 bit represents whether to move a certain angle, e.g., 45°. For example, in the first plane, left/right yaw can be at an interval of 45°, ranging from 0 to 180°. For example, in some examples, if the 4 bits are "0001", it represents that the first mobile terminal does not ascend, does not descend, and yaws 45° to the left in the first plane.

Among the 10 bits, 4 bits represent that the first mobile terminal moves in a second plane, for example, the 4 bits represent an operation by a right knob of the UAV. Of the 4 bits, 1 bit represents moving forward in the second plane; 1 bit represents moving backward in the second plane; 1 bit represents transversely moving leftwards in the second plane; and 1 bit represents transversely moving rightwards in the second plane. For example, in some examples, if the 4 bits are "0000", it represents the first mobile terminal having no action in the second plane.

For example, the first plane represents a plane parallel to the vertical direction, and the second plane can represent a plane parallel to the horizontal direction.

For example, in some embodiments, the display screen includes a touch remote control region; the touch remote control region includes a plurality of virtual keys; and the control interaction information is determined based on an operation applied to the plurality of virtual keys.

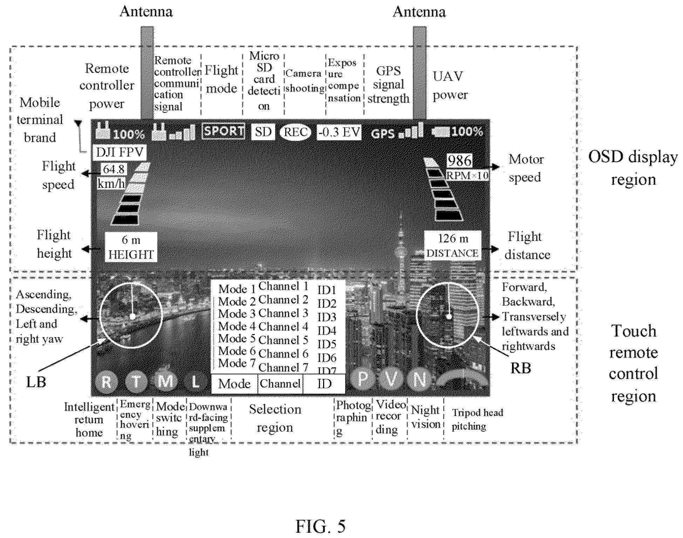

FIG. 5 is a schematic diagram of an interactive interface of a control terminal in a one-to-one control mode with a first mobile terminal provided in some embodiments of the present disclosure. For example, the interactive interface can be a picture displayed on a display screen of the control terminal.

For example, in one example, as shown in FIG. 5, a display region of the display screen can be an on-screen display (OSD) display region shown in FIG. 5.

In step S21, the state information in the first mobile terminal information obtained by parsing can be displayed in the OSD display region. For example, the state information in the first mobile terminal information can include a flight speed (e.g., 64.8 km/h shown in FIG. 5), a flight height (e.g., 6 meters shown in FIG. 5), a flight distance (e.g., 126 meters shown in FIG. 5), UAV power (the power shown in FIG. 5 is represented in percentage, which is 100%), and the like.

For example, as shown in FIG. 5, the OSD display region can further display information such as a mobile terminal brand, a motor speed (e.g., 986 Revolutions Per minute (RPM)*10 shown in FIG. 5), GPS signal strength, remote controller power (i.e., the power of the control terminal, and the power shown in FIG. 5 is represented in percentage, which is 100%), a remote controller communication signal, a flight mode (SPORT shown in FIG. 5 represents a motion mode), Micro SD card detection, camera shooting, and exposure compensation. For example, the mobile terminal brand can be determined based on the product brand code in the first mobile terminal information. For example, a matching list between the product brand codes and the mobile terminal brands may be preset. Thus, after a product brand code is obtained by parsing, the mobile terminal brand corresponding to the product brand code can be determined from the matching list according to the corresponding matching relationship, and the mobile terminal brand is displayed in the OSD display region.

For example, as shown in FIG. 5, in the touch remote control region, the plurality of virtual keys can be R, T, M, L, P, V, N, LB, RB, Mode, Channel, ID, etc. R represents intelligent return home; T represents emergency hovering; M represents mode switching which represents switching between state modes; L represents downward-facing supplementary light; P represents photographing; V represents recording a video; N represents night vision; and the fan-shaped annular virtual key shown in FIG. 5 represents tripod head pitching.

The circular region LB on the left in FIG. 5 can represent the left knob of the UAV, and the circular region RB on the right in FIG. 5 can represent the right knob of the UAV. The left knob of the UAV is used for controlling ascending, descending, and left and right yaw of the first mobile terminal, and the right knob of the UAV is used for controlling the first mobile terminal to move forward, move backward, and transversely move leftwards and rightwards.

Mode, Channel, and ID are set in a selection region of the touch remote control region; the Mode represents a control mode and can include mode 1 to mode 7 and the like. The ID represents the mobile terminal identification information; ID can include ID 1 to ID 7 and the like. The Channel can represent the transmission channel information. The Channel may include channel 1 to channel 7 and the like, and each channel corresponds to one mobile terminal. In the control process, different mobile terminals can be switched through Channel selection and ID selection in the selection region.

For example, the image below the various kinds of information shown in FIG. 5 is a video/image captured by the first mobile terminal. The video/image is synchronous with the various kinds of information (such as the flight speed, the flight height, the flight distance, and the like) displayed in FIG. 5. That is, when the first mobile terminal captures the video/image, the flight speed of the first mobile terminal is 64.8 km/h, the flight height of the first mobile terminal is 6 meters, and the flight distance of the first mobile terminal is 126 meters.

For example, as shown in FIG. 4, step S23: transmitting the first control terminal control information to the first mobile terminal to control the first mobile terminal.

For example, in some embodiments, step S23 may include: determining, based on the first control terminal control information, a second image transmission channel; and transmitting, through the second image transmission channel, the first control terminal control information to the first mobile terminal to control the first mobile terminal. For example, an image transmission channel for transmitting the first control terminal control information can be determined based on the transmission channel information in the first control terminal control information. When the control terminal controls a plurality of mobile terminals, the control terminal can transmit a plurality of pieces of control terminal control information corresponding to the plurality of mobile terminals to the plurality of mobile terminals through a plurality of image transmission channels, respectively. It needs to be noted that the first control terminal control information can also be transmitted to the first mobile terminal in other suitable transmission manners.

For example, as shown in FIG. 3, the control terminal can transmit the first control terminal control information for controlling the first mobile terminal to the first mobile terminal through the second image transmission channel.

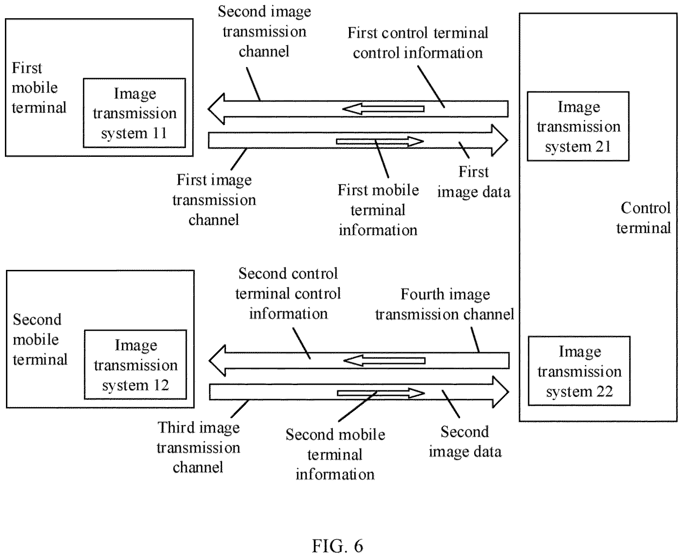

FIG. 6 is a schematic diagram of information transmission among a first mobile terminal, a second mobile terminal, and a control terminal provided in some embodiments of the present disclosure.

For example, as shown in FIG. 6, the first mobile terminal includes an image transmission system 11, the second mobile terminal includes an image transmission system 12, and the control terminal includes an image transmission system 21 and an image transmission system 22. The image transmission system 11 and the image transmission system 21 are configured to implement information transmission between the first mobile terminal and the control terminal, and the image transmission system 12 and the image transmission system 22 are configured to implement information transmission between the second mobile terminal and the control terminal.

For example, as shown in FIG. 6, the first mobile terminal can communicate with the control terminal through two image transmission channels (i.e., a first image transmission channel and a second image transmission channel). The first image transmission channel is used for transmitting information (e.g., first combined data including first mobile terminal information and first image data) from the first mobile terminal to the control terminal, and the second image transmission channel is used for transmitting information (e.g., first control terminal control information) from the control terminal to the first mobile terminal. Thus, the number of channels for communication between the mobile terminal and the control terminal is reduced.

For example, in some embodiments of the present disclosure, the data processing method applied to the control terminal can further include: transmitting the received first combined data transmitted from the first mobile terminal to a data center and/or a personal computer (PC). For example, the control terminal can transmit the first combined data to the data center and/or the PC in a wireless way (WiFi, Bluetooth, etc.) or a wired way (a signal line), and the data center and/or the PC can process the first combined data according to actual requirements, e.g., operations such as parsing the first combined data.

For example, in some embodiments of the present disclosure, the data center can transmit the first combined data to the PC via a network (e.g., Internet, etc.), or the PC can transmit the first combined data to the data center via a network (e.g., Internet, etc.), or the first combined data can also be transmitted between different PCs or data centers, or the first combined data can also be transmitted between different control terminals, so that in the post-image processing, the image data carries state information, of the mobile terminal capturing the image data, at a time when the mobile terminal captures the image data. For example, when the mobile terminal is a UAV, the state information can be the flight data of the UAV.

Thus, even though the first combined data including extension information (e.g., an FPV parameter (as will be described below) in the first mobile terminal information) is transmitted to other clients via the Internet, the other clients can also parse the first combined data to obtain the extension information and the first image data in the first combined data, etc. Although it is not played back in real time, this is highly helpful for knowing the state information of a mobile terminal corresponding to a clipped picture.

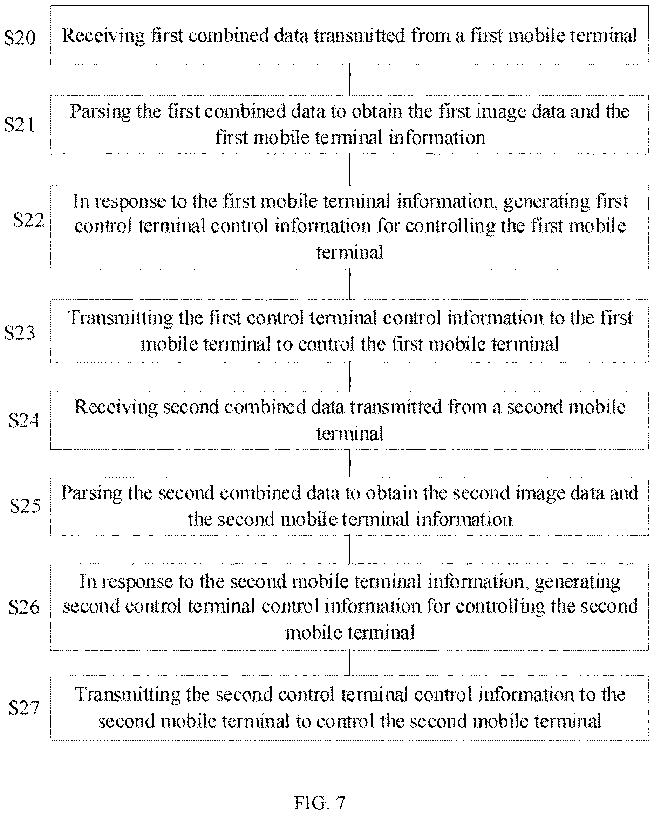

FIG. 7 is a schematic flowchart of another data processing method provided in some embodiments of the present disclosure. Steps S20-S23 shown in FIG. 7 are steps S20-S23 shown in FIG. 4, which will not be described here redundantly.

For example, in some embodiments, as shown in FIG. 7, the data processing method can further include the following step S24 to step S27.

Step S24: receiving second combined data transmitted from a second mobile terminal. For example, the second combined data can be transmitted by the second mobile terminal to the control terminal through a third image transmission channel, the second combined data is data obtained by combining second image data captured by the second mobile terminal and second mobile terminal information corresponding to the second mobile terminal. It needs to be noted that the second combined data can also be transmitted to the control terminal in other suitable transmission manners. The above description on the first mobile terminal is also applicable for the second mobile terminal in case of no conflicting.

Step S25: parsing the second combined data to obtain the second image data and the second mobile terminal information. For example, the second image data is used for displaying.

Step S26: in response to the second mobile terminal information, generating second control terminal control information for controlling the second mobile terminal. For example, regarding the second control terminal control information, a reference may be made to the related description on the first control terminal control information, with a difference that the first control terminal control information is used for controlling the first mobile terminal while the second control terminal control information is used for controlling the second mobile terminal.

Step S27: transmitting the second control terminal control information to the second mobile terminal to control the second mobile terminal.

For example, in some embodiments, step S27 may include: determining, based on the second control terminal control information, a fourth image transmission channel; and transmitting, through the fourth image transmission channel, the second control terminal control information to the second mobile terminal to control the second mobile terminal. For example, an image transmission channel for transmitting the second control terminal control information can be determined based on the transmission channel information in the second control terminal control information. It needs to be noted that the second control terminal control information can also be transmitted to the second mobile terminal in other suitable transmission manners.

For example, as shown in FIG. 6, the second mobile terminal can communicate with the control terminal through two image transmission channels (i.e., the third image transmission channel and the fourth image transmission channel). The third image transmission channel is used for transmitting information (e.g., the second combined data including the second mobile terminal information and the second image data) from the second mobile terminal to the control terminal, and the fourth image transmission channel is used for transmitting information (e.g., the second control terminal control information) from the control terminal to the second mobile terminal. Thus, the number of channels for communication between the mobile terminal and the control terminal is reduced.

For example, when the control terminal controls a plurality of mobile terminals, the control terminal can include a plurality of image transmission systems and can be provided with a plurality of uplink transmission channels (i.e., channels for transmitting information from the control terminal to the mobile terminals). The plurality of image transmission systems are in one-to-one correspondence with the plurality of mobile terminals, and the plurality of uplink transmission channels are also in one-to-one correspondence with the plurality of mobile terminals. As shown in FIG. 6, when the control terminal can control the first mobile terminal and the second mobile terminal, the control terminal can include the image transmission system 21 and the second image transmission channel for implementing information transmission with the first mobile terminal, and the image transmission system 22 and the fourth image transmission channel for implementing information transmission with the second mobile terminal.

It needs to be noted that some steps of the steps shown in FIG. 7 can be performed in parallel, and the order of the steps does not represent an order in which the steps are performed. For example, step S20 and step S24 can be performed in parallel, step S21 and step S25 can be performed in parallel, and step S20 and step S25 can be performed in parallel. The present disclosure has no limitation on the order in which the steps are performed.

For example, the data processing method further includes: displaying the first image data and the second image data on the display screen.

For example, in some embodiments, the display screen includes a display region, the display region includes a first display sub-region. Displaying the first image data and the second image data on the display screen includes: displaying the first image data in the display region; and displaying the second image data in the first display sub-region. For example, in the first display sub-region, the second image data overlies a part, in the first display sub-region, of the first image data. In other words, the second image data is superposed on the first image data for displaying.

For example, in some other embodiments, the display screen includes a display region, the display region includes a first display sub-region and a second display sub-region, and the first display sub-region and the second display sub-region do not overlap. In other words, the first display sub-region and the second display sub-region do not overlap in a direction perpendicular to a surface of the display region. Displaying the first image data and the second image data on the display screen includes: displaying the first image data in the first display sub-region; and displaying the second image data in the second display sub-region. In this case, the first image data and the second image data are displayed separately.

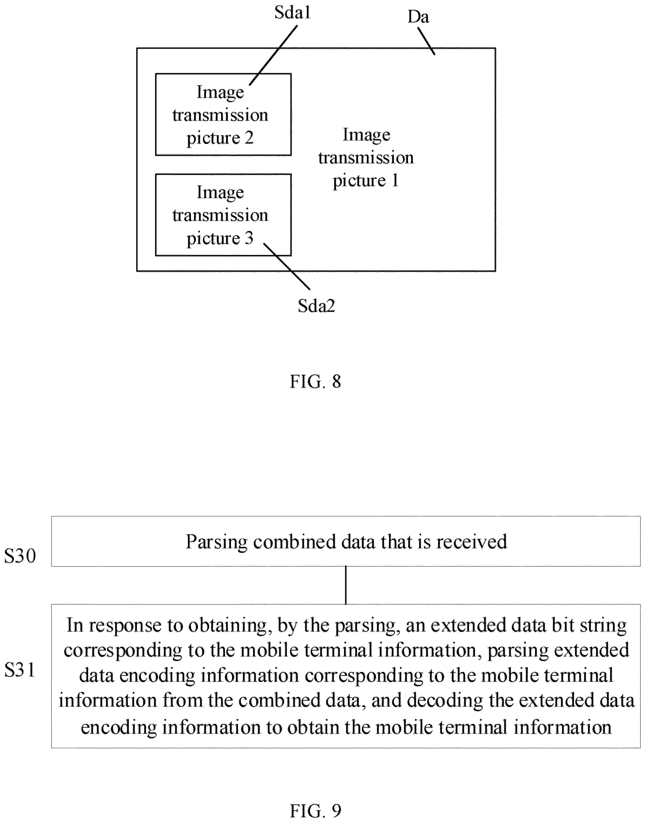

FIG. 8 is a schematic diagram of a display interface of a display screen of a control terminal provided in some embodiments of the present disclosure. As shown in FIG. 8, in some embodiments, the control terminal can control three mobile terminals, and the image data transmitted by the three mobile terminals is an image transmission picture 1, an image transmission picture 2, and an image transmission picture 3, respectively. The display region Da of the display screen includes a first display sub-region Sda1 and a second display sub-region Sda2. The first display sub-region Sda1 and the second display sub-region Sda2 do not overlap. The image transmission picture 1 can be displayed in the entire display region Da, the image transmission picture 2 can be displayed in the first display sub-region Sda1, and the image transmission picture 3 can be displayed in the second display sub-region Sda2. In the first display sub-region Sda1, the image transmission picture 2 overlies a part, in the first display sub-region Sda1, of the image transmission picture 1, and in the second display sub-region Sda2, the image transmission picture 3 overlies a part, in the second display sub-region Sda2, of the image transmission picture 1.

The content of adding an extension data definition item corresponding to the mobile terminal information to the AVS3 coding standard is simply described below. As shown below, the following description is made by taking for example that the extension data definition item corresponding to the state information in the mobile terminal information is added. For example, the state information can include an FPV parameter. The FPV parameter can be the above-mentioned first state parameter (when the mobile terminal information is the first mobile terminal information) or second state parameter (when the mobile terminal information is the second mobile terminal information). For example, the FPV parameter can include at least one of the following parameters: an ambient light intensity, a vision parameter, a height, a power, a distance, an ambient temperature, and the like.

Table 3 shows extension data definition in the AVS3 coding standard.

**Table 3**

| Extension Data Definition | Descriptor |
|---|---|
| extension_data(i) { | |
| while (next_bits(32) == extension_start_code) { | |
| extension_start_code | f(32) |
| if (i == 0) { /* Behind sequence header */ | |
| if (next_bits(4) == '0010') /* Sequence display extension */ | |
| sequence_display_extension() | |
| else if (next_bits(4) == '0011') /* Temporal scalability extension */ | |
| temporal_scalability_extension() | |
| else if (next_bits(4) == '0100') /* Copyright extension */ | |
| copyright _extension() | |
| else if (next_bits(4) == '0110') /* Content encryption extension */ | |
| cei_extension( ) | |
| else if (next_bits(4) == '1010') /* Target device display and content metadata extension */ | |
| mastering_display_and_content_metadata_extension() | |
| else if (next_bits(4) == '1011') /* Camera parameter extension */ | |
| camera_parameters_extension() | |
| else if (next_bits(4)=='1101') /* Reference knowledge image extension */ | |
| cross_random_access_point_reference_extension() | |
| else | |
| while (next_bits(24) != '0000 0000 0000 0000 0000 0001') | |
| reserved_extension_data_byte | u(8) |
| } | |
| } | |
| else { /* Behind picture header */ | |
| if (next_ bits(4) == '0100') /* Copyright extension */ | |
| copyright_extension() | |
| else if (next_bits(4) == '0101') /* High dynamic range image metadata extension */ | |
| hdr_dynamic_metadata_extension() | |
| else if (next_ bits(4) == '0111') /* Picture display extension */ | |
| picture_display_extension() | |
| else if (next_bits(4) =='1011') /* Camera parameter extension */ | |
| camera_parameters_extension() | |
| else if (next_bits(4) == '1100') /* Region of Interest parameter extension */ | |
| roi_parameters_extension() | |
| else if (next_ bits(4) == 'xxxx') /* FPV parameter extension */ | |
| fpv_extension() | |
| else { | |
| while (next_bits(24) != '0000 0000 0000 0000 0000 0001') | |
| reserved_extension_data_byte | u(8) |
| } | |
| } | |
| } | |
| } | |

For example, the state information in the mobile terminal information can include the FPV parameter, so that the FPV parameter extension can be added in the extension data definition. The following expression shown in Table 3 represents adding the extension data definition item corresponding to the FPV parameter extension.

```
else if (next_bits(4) == 'xxxx') /* FPV parameter extension */
 fpv_extension()
```

For example, the bit string 'xxxx' is used for identifying the FPV parameter extension. A specific value of "xxxx" can be set according to an actual situation as long as the value of "xxxx" is not identical to a value in the existing extension data definition item, which is not particularly limited in the present disclosure.

It needs to be noted that the FPV parameter extension represents that the mobile terminal information in the combined data includes coding information corresponding to the FPV parameter.

For example, Table 3 further shows other extension data definition items. For example, "0010" is used for indicating the sequence display extension, "0011" is used for indicating the temporal scalability extension, and "0100" is used for indicating the copyright extension, and so on.

Table 4 shows related description of FPV parameter extension definition.

**Table 4**

| FPV Parameter Extension Definition | Descriptor |
|---|---|
| bit_convertion_extension() { | |
| extension_id | f(4) |
| extension_id | f(4) |
| if (fpvControl != 1) { | |
| visionSensor /* Vision system parameter extension bit */ | u(1) |
| ambientLightIntensityThreshold /* Ambient light intensity parameter extension bit */ | u(1) |
| fpvAltitude /* Flight height parameter extension bit */ | u(11) |
| fpvPower /* UAV power parameter extension bit */ | u(7) |
| fpvRange /* Aircraft residual cruising range parameter extension bit */ | u(15) |
| fpvTemp /* Ambient temperature parameter extension bit */ | u(7) |
| } | |
| if (fpvControl = 1) { | |
| modeCtl /* Mode selection parameter extension bit */ | u(4) |
| channelCtl /* Image transmission channel and mobile terminal ID selection parameter extension bit */ | u(9) |
| returningCtl /* Intelligent return home R parameter extension bit */ | u(1) |
| exigentStopCtl /* Emergency hovering T parameter extension bit */ | u(1) |
| modeSwitchCtl /* Mode switching M parameter extension bit */ | u(3) |
| leftKnobCtl /* UAV left knob parameter extension bit */ | u(4) |
| rightKnobCtl /* UAV right knob parameter extension bit */ | u(4) |
| photoCtl /* Photographing P parameter extension bit */ | u(1) |
| videoCtl /* Video recording V parameter extension bit */ | u(1) |
| nightVionCtl /* Night vision N parameter extension bit */ | u(1) |
| tripodHeadCtl /* Tripod head pitching parameter extension bit */ | u(2) |
| downFlashCtl /* Downward-facing supplementary light L parameter extension bit */ | u(1) |
| } | |

In Table 4, "extension id" represents a video extension label.

"fpvControl" represents an FPV control parameter mode, and the fpvControl is a binary variable. When a value of the fpvControl is 1, it represents that the FPV control parameter indicates that it is currently in a control mode; and when the value of the fpvControl is 0, it represents that the FPV control parameter indicates that it is currently in a state return mode.

"visionSensor" represents the vision system parameter extension bit. The visionSensor is represented using a 1-bit unsigned integer and is used for representing the above-mentioned vision parameter, i.e., sensing whether there is an obstacle around a mobile terminal. When a value of the visionSensor is 0, it represents no obstacle.

"ambientLightIntensityThreshold" represents the above-mentioned ambient light intensity. The ambientLightIntensityThreshold is represented using a 1-bit unsigned integer. A threshold of the ambient light intensity can be set according to an actual situation, e.g., 15 lux. When the value of ambientLightIntensityThreshold is 1, it represents that the ambient light intensity is lower than the threshold, thus prompting the user to turn on the fill-in light to supplement light.

"fpvAltitude" represents the above-mentioned flight height. The fpvAltitude can be represented using a 11-bit unsigned integer. The flight height ranges from 0 to 2 km, and a threshold of the flight height can be determined according to a specific flight area. When the flight height is greater than the flight area height limit, a vibrating alert can be given, thus prompting the user to control the UAV to reduce the flight height of the UAV.

"fpvPower" represents the above-mentioned UAV power. The fpvPower can be represented using a 7-bit unsigned integer. The UAV power can be represented in percentage. The UAV power ranges from 0 to 100%.

"fpvRange" represents the aircraft residual cruising range. For example, the aircraft residual cruising range can be the above-mentioned flight distance. The fpvRange can be represented using a 15-bit unsigned integer. A range of the flight distance can be set according to an actual situation, e.g., 0 to 20 km. In combination with the UAV power and the flight distance, a returning risk of the UAV is estimated and a warning is given, thus allowing the user to perform a corresponding operation according to the warning and avoiding cases such as loss of the UAV.

"fpvTemp" represents the above-mentioned ambient temperature. The fpvTemp may be represented using a 7-bit unsigned integer. A temperature range of the ambient temperature may be set according to an actual situation, e.g., -10°C to 40°C. The first one (i.e., the first bit) of the 7 bits is a sign bit. If the ambient temperature exceeds the temperature range, an early warning prompt can be given, thus allowing the user to perform a corresponding operation according to the early warning prompt and avoiding the UAV from being damaged.

"modeCtl" represents the above-mentioned control mode information. The modeCtl is represented using a 4-bit unsigned integer. The control mode information can indicate one-to-one control or one-to-many control.

"channelCtl" represents the above-mentioned transmission channel information and the mobile terminal identification information. The channelCtl can be represented using a 9-bit unsigned integer. The transmission channel information can be represented using 5 bits. At present, under the FCC certification standard, a UAV supports at most 8 communication channels, i.e., it can be implemented that 8 UAVs fly simultaneously. In consideration of supporting more frequency bands in the future, the transmission channel information is represented using 5 bits to satisfy follow-up development. The mobile terminal identification information can be represented using 4 bits.

"returningCtl" represents the above-mentioned intelligent return home (R) parameter. The returningCtl is represented using a 1-bit unsigned integer. If a value of the returningCtl is 0, it represents not returning.

"exigentStopCtl" represents the above-mentioned emergency hovering (T) parameter. The exigentStopCtl is represented using a 1-bit unsigned integer. If a value of the exigentStopCtl is 0, it represents not hovering.

"modeSwitchCtl" represents the above-mentioned mode switching (M) parameter. The mode switching parameter is the above-mentioned state mode information. The modeSwitchCtl can be represented using a 3-bit unsigned integer.

"leftKnobCtl" can represent the left knob parameter, and "rightKnobCtl" can represent the right knob parameter. The left knob parameter represents the movement of the first mobile terminal in the first plane, i.e., the operation by the left knob of the UAV. The right knob parameter represents the movement of the first mobile terminal in the second plane, i.e., the operation by the right knob of the UAV. The leftKnobCtl is represented using a 4-bit unsigned integer. Of the 4 bits, 1 bit represents ascending in the first plane; 1 bit represents descending in the first plane; 1 bit represents a symbol bit left/right; and 1 bit represents whether to move 45°. The rightKnobCtl is represented using a 4-bit unsigned integer. Of the 4 bits, 1 bit represents moving forward in the second plane; 1 bit represents moving backward in the second plane; 1 bit represents transversely moving leftwards in the second plane; and 1 bit represents transversely moving rightwards in the second plane.

"photoCtl" represents the above-mentioned photographing (P) parameter, and "videoCtl" represents the above-mentioned video recording (V) parameter. The photographing parameter and the video recording parameter are the above-mentioned shooting information. The photoCtl is represented using a 1-bit unsigned integer, and when a value of the photoCtl is 0, it represents not photographing. The videoCtl is represented using a 1-bit unsigned integer, and when a value of the videoCtl is 0, it represents not recording a video.

"nightVionCtl" represents the above-mentioned night vision (N) parameter. The nightVionCtl can be represented using a 1-bit unsigned integer, and when a value of the nightVionCtl is 0, it represents not enabling the night vision function.

"tripodHeadCtl" represents a tripod head pitching parameter, and the tripod head pitching parameter can be the above-mentioned angle information. The tripodHeadCtl can be represented using a 2-bit unsigned integer. The tripod head pitching parameter can indicate elevating, lowering, maintaining, and the like. One bit (1 bit) of the 2 bits represents elevating, and the other bit (1 bit) of the 2 bits represents lowering. When the 2 bits are both 00, it represents maintaining. A range of the tripod head pitching parameter can be defined according to an actual situation. If the tripod head pitching parameter goes beyond the corresponding range, a vibration alert is given.

"downFlashCtl" represents a downward-facing supplementary light (L) parameter. The downFlashCtl can be represented using a 1-bit unsigned integer. When a value of the downFlashCtl is 0, it represents not enabling the downward-facing supplementary light function; and when the value of the downFlashCtl is 1, it represents enabling the downward-facing supplementary light function.

At least some embodiments of the present disclosure further provide a decoding method. FIG. 9 is a schematic diagram of a decoding method provided in some embodiments of the present disclosure.

For example, as shown in FIG. 9, the decoding method can include the following steps S30-S31.

Step S30: parsing combined data that is received.

Step S31: in response to obtaining, by the parsing, an extended data bit string corresponding to the mobile terminal information, parsing extended data encoding information corresponding to the mobile terminal information from the combined data, and decoding the extended data encoding information to obtain the mobile terminal information.

For example, the combined data is data obtained by combining image data captured by a mobile terminal and mobile terminal information corresponding to the mobile terminal.

For example, in some embodiments, the decoding method can be applied to a control terminal (the control terminal can be the control terminal described in any embodiment of the present disclosure); the combined data can be transmitted by the mobile terminal to the control terminal through the same image transmission channel; and the transmission channel can be an image transmission channel. It needs to be noted that the combined data can also be transmitted from the mobile terminal to the control terminal by other suitable manners, which will not be limited in the embodiments of the present disclosure.

For example, in some embodiments, the decoding method further includes: parsing image encoding information corresponding to the image data from the combined data; and decoding the image encoding information to obtain the image data.

For example, the image encoding information can include an image sequence, and the image sequence can include one or more encoded image, at least one sequence header, and a video sequence end code (video_sequence_end_code). The sequence header can include a video sequence start code (video_sequence_start_code). The video sequence start code is used for identifying the start of the image (e.g., video) sequence, and the video sequence end code is used for identifying the end of the image sequence. In some examples, a code value of the video sequence start code is a hexadecimal number B0, and a code value of the video sequence end code is a hexadecimal number B 1.

For example, each sequence header is followed by one or more encoded image. For example, the encoded image can be an encoded picture, and a picture header should be present before each encoded picture. A plurality of encoded pictures are arranged in a bitstream order in a bitstream (i.e., a bitstream corresponding to the combined data), and the bitstream order should be identical to a decoding order. The decoding order can be different from a display order.

For example, the mobile terminal information can represent extension data information (extension_data) in the combined data.

For example, in some embodiments, the mobile terminal is a UAV, and the mobile terminal information includes information generated by the UAV. For example, the information generated by the UAV is the above-mentioned state information, and the state information can include the FPV parameter.

For another example, the mobile terminal information can further include identity information corresponding to the UAV. In the case that the mobile terminal is the UAV, an information head and mobile terminal identity information corresponding to the mobile terminal in the mobile terminal information can be used for identifying the identity information corresponding to the UAV.

For example, in step S31, a bitstream corresponding to the combined data is parsed. When a bit having the same code value as a video extension start code (extension_start_code) is present in the bitstream, it represents that the combined data includes extension data. For example, in some embodiments, a code value of the video extension start code can be a hexadecimal number B5, that is, when a value represented by some bits in the bitstream is B5, it represents that the combined data includes the extension data.

For example, with referring to Table 3, the extension data can include one or more of data corresponding to the sequence display extension, data corresponding to the temporal scalability extension, data corresponding to the copyright extension, data corresponding to the content encryption extension, data corresponding to the target device display and content metadata extension, data corresponding to the camera parameter extension, data corresponding to the reference knowledge image extension, data corresponding to the high dynamic range image metadata extension, data corresponding to the picture display extension, data corresponding to the camera parameter extension, data corresponding to the region of interest parameter extension, data corresponding to the FPV parameter extension, and the like. In an actual situation, the specific type of the extension data needs to be determined according to a value represented by one or more particular bits behind the video extension start code.

For example, the video extension start code marks the start of the "extension information" in the combined data.

For example, in some embodiments, the extended data bit string can include an FPV extended data bit string; the information generated by the UAV in the mobile terminal information includes the FPV parameter; and the extended data encoding information includes information obtained by encoding the FPV parameter. In step S31, after the video extension start code is obtained by parsing, continue to parse bits behind the video extension start code in the bitstream. If an FPV extended data bit string (e.g., "xxxx" shown in Table 3) is obtained by parsing at fixed bits, it represents that the FPV parameter is present in the combined data. Thus, a parsing operation corresponding to the FPV parameter extension can be performed. For example, performing the parsing operation corresponding to the FPV parameter extension can include: decoding the extended data encoding information corresponding to the mobile terminal information in the bitstream of the combined data, thereby obtaining the information (e.g., the FPV parameter) generated by the UAV in the mobile terminal information. For example, the extended data encoding information can be decoded based on the FPV parameter extension definitions shown in Table 4 above to obtain the information generated by the UAV in the mobile terminal information.

For example, the value represented by the one or more particular bits behind the video extension start code is identical to the corresponding code value shown in Table 3, it represents that the combined data includes related extension data corresponding to the identical code value. For example, in some embodiments, referring to Table 3, in the case of i=0, if four bits behind the sequence header are "0010", it represents that the extension data includes the data corresponding to the sequence display extension, and therefore, the parsing operation corresponding to the sequence display extension can be performed. If four bits behind the sequence header are "1011", it represents that the extension data includes the data corresponding to the camera parameter extension, and therefore, the parsing operation corresponding to the camera parameter extension can be performed. In the case that i is not equal to 0, if four bits behind the picture header are "010 1", it represents that the extension data includes the data corresponding to the high dynamic range image metadata extension, and therefore, the parsing operation corresponding to the dynamic range image metadata extension can be performed. If four bits behind the picture header are "xxxx", it represents that the extension data includes the data corresponding to the FPV parameter extension, and therefore, the parsing operation corresponding to the FPV parameter extension may be performed.

For example, in the case that the mobile terminal information further includes the identity information corresponding to the UAV (e.g., the information header and the mobile terminal identity information corresponding to the mobile terminal), the extended data encoding information can further include information obtained by encoding the identity information corresponding to the UAV. Thus, in step S31, after decoding the extended data encoding information, the identity information corresponding to the UAV in the mobile terminal information can also be obtained.

It needs to be noted that the specific positions of "FPV extended data bit string", "video extension start code", and the like in the bitstream can be set according to an actual situation, which is not limited by the embodiments of the present disclosure.

For example, in some embodiments, the decoding method further includes: in response to not obtaining the extended data bit string corresponding to the mobile terminal information by parsing, it representing that the combined data does not include the mobile terminal information, and therefore, the parsing operation corresponding to the extended data bit string may not need to be performed.

For example, in the embodiments of the present disclosure, the decoding method is not limited to be applied to the control terminal, and can also be applied to any terminal. For example, if the control terminal transmits the combined data to a data center, the data center can implement the decoding method to parse the combined data. For another example, if the combined data is transmitted to a particular PC and/or a mobile phone, the PC and/or the mobile phone can implement the decoding method to parse the combined data.

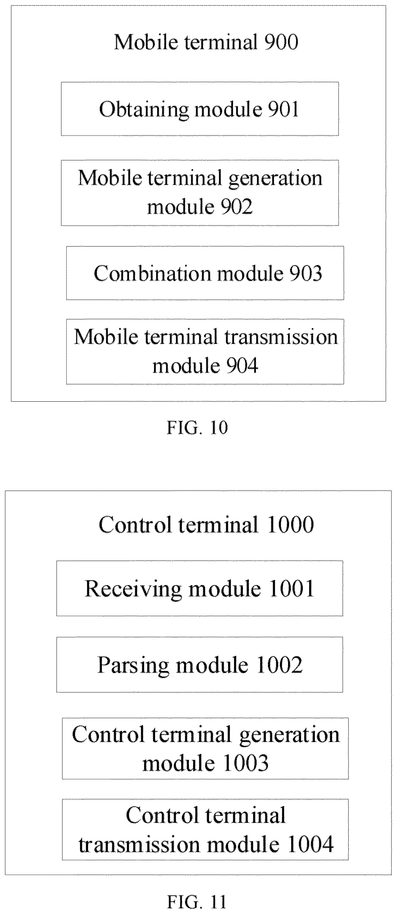

At least some embodiments of the present disclosure further provide a mobile terminal. FIG. 10 is a schematic block diagram of a mobile terminal provided in some embodiments of the present disclosure.

As shown in FIG. 10, the mobile terminal 900 includes an obtaining module 901, a mobile terminal generation module 902, a combination module 903, and a mobile terminal transmission module 904. The mobile terminal 900 can be configured to implement the data processing method shown in FIG. 1. The mobile terminal 900 can achieve the technical effects achieved by the data processing method shown in FIG. 1. The mobile terminal 900 can be the first mobile terminal or the second mobile terminal.

The obtaining module 901 is configured to obtain image data captured by the mobile terminal. The obtaining module 901 can be used to implement step S10 in the data processing method shown in FIG. 1. Regarding the specific description of the function that the obtaining module 901 can implement, a reference may be made to the description on step S10 in the embodiment of the above-mentioned data processing method.

The mobile terminal generation module 902 is configured to generate mobile terminal information corresponding to the mobile terminal. The mobile terminal generation module 902 can be used to implement step S11 in the data processing method shown in FIG. 1. Regarding the specific description of the function that the mobile terminal generation module 902 can implement, a reference may be made to the description on step S11 in the embodiment of the above-mentioned data processing method.

The combination module 903 is configured to combine the image data and the mobile terminal information to obtain combined data. The combination module 903 can be used to implement step S12 in the data processing method shown in FIG. 1. Regarding the specific description of the function that the combination module 903 can implement, a reference may be made to the description on step S12 in the embodiment of the above-mentioned data processing method.

The mobile terminal transmission module 904 is configured to transmit the combined data to a control terminal. For example, the mobile terminal transmission module 904 is configured to transmit the combined data to the control terminal through a first image transmission channel. The mobile terminal transmission module 904 can be used to implement step S13 in the data processing method shown in FIG. 1. Regarding the specific description of the function that the mobile terminal transmission module 904 can implement, a reference may be made to the description on step S13 in the embodiment of the above-mentioned data processing method.

For example, data transmission can be implemented among the obtaining module 901, the mobile terminal generation module 902, the combination module 903, and the mobile terminal transmission module 904.

For example, the obtaining module 901, the mobile terminal generation module 902, the combination module 903, and the mobile terminal transmission module 904 can be implemented by hardware, software, firmware, and any feasible combination thereof.

In some embodiments, the obtaining module 901, the mobile terminal generation module 902, the combination module 903, and/or the mobile terminal transmission module 904 include(s) a code and a program stored in a memory. A processor can execute the code and the program to implement some or all functions of the obtaining module 901, the mobile terminal generation module 902, the combination module 903, and/or the mobile terminal transmission module 904 as described above. In some other embodiments, the obtaining module 901, the mobile terminal generation module 902, the combination module 903, and/or the mobile terminal transmission module 904 can be special-purpose hardware devices to implement some or all functions of the obtaining module 901, the mobile terminal generation module 902, the combination module 903, and/or the mobile terminal transmission module 904 as described above. For example, the obtaining module 901, the mobile terminal generation module 902, the combination module 903, and/or the mobile terminal transmission module 904 can be one circuit board or a combination of a plurality of circuit boards to implement the functions as described above. In the embodiments of the present disclosure, the one circuit board or the combination of the plurality of circuit boards can include: (1) one or more processors; (2) one or more non-transitory computer-readable memories connected to the processor(s); and (3) firmware executable by the processor(s) and stored in the memory(s).

At least some embodiments of the present disclosure further provide a control terminal. FIG. 11 is a schematic block diagram of a control terminal provided in some embodiments of the present disclosure.

As shown in FIG. 11, the control terminal 1000 includes a receiving module 1001, a parsing module 1002, a control terminal generation module 1003, and a control terminal transmission module 1004. The control terminal 1000 can be configured to implement the data processing method shown in FIG. 4, and the control terminal 1000 can achieve the technical effects achieved by the data processing method shown in FIG. 4.

The receiving module 1001 is configured to receive combined data transmitted (e.g., transmitted through a first image transmission channel) from a mobile terminal. The combined data is data obtained by combining image data captured by the mobile terminal and mobile terminal information corresponding to the mobile terminal. The receiving module 1001 can be configured to implement step S20 in the data processing method shown in FIG. 4. Regarding the specific description of the function that the receiving module 1001 can implement, a reference may be made to the description on step S20 in the embodiment of the above-mentioned data processing method.

The parsing module 1002 is configured to parse the combined data to obtain the image data and the mobile terminal information. The image data is used for displaying. The parsing module 1002 can be configured to implement step S21 in the data processing method shown in FIG. 4. Regarding the specific description of the function that the parsing module 1002 can implement, a reference may be made to the description on step S21 in the embodiment of the above-mentioned data processing method.

The control terminal generation module 1003 is configured to, in response to the mobile terminal information, generate control terminal control information for controlling the mobile terminal. The control terminal generation module 1003 can be configured to implement step S22 in the data processing method shown in FIG. 4. Regarding the specific description of the function that the control terminal generation module 1003 can implement, a reference may be made to the description on step S22 in the embodiment of the above-mentioned data processing method.

The control terminal transmission module 1004 is configured to transmit the control terminal control information to the mobile terminal to control the mobile terminal. The control terminal transmission module 1004 can be configured to implement step S23 in the data processing method shown in FIG. 4. Regarding the specific description of the function that the control terminal transmission module 1004 can implement, a reference may be made to the description on step S23 in the embodiment of the above-mentioned data processing method.

For example, data transmission can be implemented among the receiving module 1001, the parsing module 1002, the control terminal generation module 1003, and the control terminal transmission module 1004.

For example, the receiving module 1001, the parsing module 1002, the control terminal generation module 1003, and the control terminal transmission module 1004 can be implemented by hardware, software, firmware, and any feasible combination thereof.

In some embodiments, the receiving module 1001, the parsing module 1002, the control terminal generation module 1003, and/or the control terminal transmission module 1004 include(s) a code and a program stored in a memory. A processor can execute the code and the program to implement some or all functions of the receiving module 1001, the parsing module 1002, the control terminal generation module 1003, and/or the control terminal transmission module 1004 as described above. In some other embodiments, the receiving module 1001, the parsing module 1002, the control terminal generation module 1003, and/or the control terminal transmission module 1004 can be special-purpose hardware devices to implement some or all functions of the receiving module 1001, the parsing module 1002, the control terminal generation module 1003, and/or the control terminal transmission module 1004 as described above. For example, the receiving module 1001, the parsing module 1002, the control terminal generation module 1003, and/or the control terminal transmission module 1004 can be one circuit board or a combination of a plurality of circuit boards to implement the functions as described above. In the embodiments of the present disclosure, the one circuit board or the combination of the plurality of circuit boards can include: (1) one or more processors; (2) one or more non-transitory computer-readable memories connected to the processor(s); and (3) firmware executable by the processor(s) and stored in the memory(s).

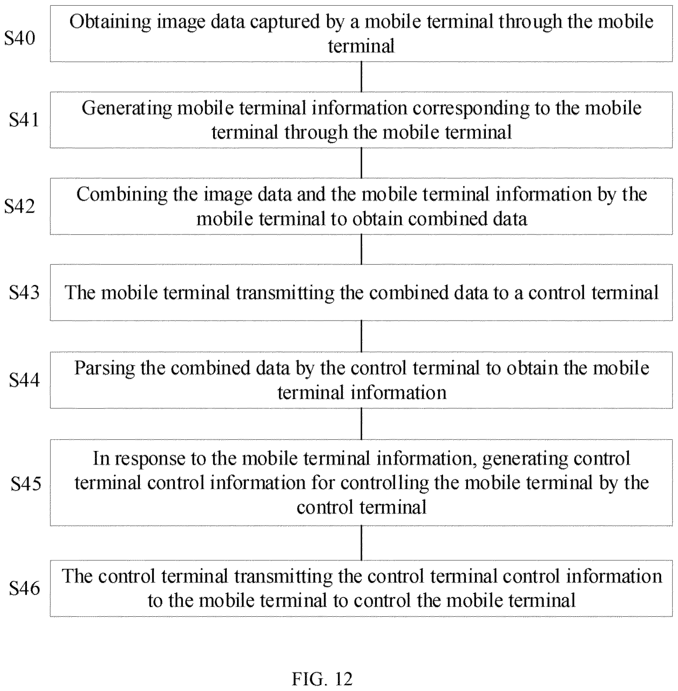

At least some embodiments of the present disclosure further provide a data processing method. FIG. 12 is a schematic diagram of a data processing method provided in some other embodiments of the present disclosure.

As shown in FIG. 12, the data processing method can include the following steps S40-S46.

Step S40: obtaining image data captured by a mobile terminal through the mobile terminal.

Step S41: generating mobile terminal information corresponding to the mobile terminal through the mobile terminal.

Step S42: combining the image data and the mobile terminal information by the mobile terminal to obtain combined data.

Step S43: the mobile terminal transmitting the combined data to a control terminal.

Step S44: parsing the combined data by the control terminal to obtain the mobile terminal information. For example, in step S44, the control terminal can further obtain the image data by parsing the combined data, and the image data can be displayed on a display screen of the control terminal.

Step S45: in response to the mobile terminal information, generating control terminal control information for controlling the mobile terminal by the control terminal.

Step S46: the control terminal transmitting the control terminal control information to the mobile terminal to control the mobile terminal.

Regarding the detailed description of a process of performing data processing using the data processing method shown in FIG. 12, a reference may be made to the related descriptions in the embodiments of the data processing method applied to the first mobile terminal and the data processing method applied to the control terminal, which will not be described here redundantly.

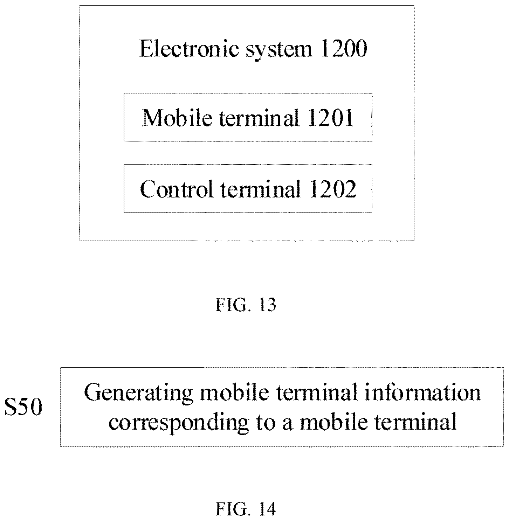

At least some embodiments of the present disclosure further provide an electronic system. FIG. 13 is a schematic block diagram of an electronic system provided in some embodiments of the present disclosure.

For example, as shown in FIG. 13, the electronic system 1200 includes a mobile terminal 1201 and a control terminal 1202. In some embodiments, the mobile terminal 1201 can be the above-mentioned mobile terminal 900, and the control terminal 1202 can be the above-mentioned control terminal 1000. The electronic system 1200 can be configured to implement the data processing method shown in FIG. 12. It should be noted that the components of the electronic system 1200 shown in FIG. 13 are merely exemplary and not restrictive. According to actual application requirements, the electronic system 1200 can further have other components. For example, the electronic system 1200 can include a plurality of mobile terminals and/or a plurality of control terminals. Each control terminal can control the plurality of mobile terminals, and each mobile terminal can be controlled by the plurality of control terminals. In the electronic system, the mobile terminal and the control terminal can identify the identities of each other and achieve mutual control. Thus, the operation processes can be simplified, and the control operations of the control terminal are caused to be more flexible and changeable.

For example, the mobile terminal 1201 is configured to: obtain image data captured by the mobile terminal; generate mobile terminal information corresponding to the mobile terminal; combine the image data and the mobile terminal information to obtain combined data; and transmit the combined data to a control terminal. The mobile terminal 1201 can be configured to implement the data processing method shown in FIG. 1. The mobile terminal 1201 can achieve the technical effects achieved by the data processing method shown in FIG. 1.

For example, the control terminal 1202 is configured to: receive combined data; parse the combined data to obtain mobile terminal information; in response to the mobile terminal information, generate control terminal control information for controlling the mobile terminal; and transmitting the control terminal control information to the mobile terminal to control the mobile terminal. The control terminal 1202 can be configured to implement the data processing method shown in FIG. 4. The control terminal 1202 can achieve the technical effects achieved by the data processing method shown in FIG. 4.

The electronic system 1200 provided in the embodiments of the present disclosure can be applied to an Internet system, and the mobile terminal 1201 and the control terminal 1202 are connected via a network. The network can be a wired network and/or a wireless network to implement data transmission. The wired network can transmit data by means of, e.g., a twisted pair wire, a coaxial cable, optical fiber transmission, or the like, and the wireless network can transmit data by means of, e.g., 3G/4G/5G mobile communication networks, Bluetooth, Zigbee, WiFi, or the like. The present disclosure has no limitation thereto.

At least some embodiments of the present disclosure further provide an information generation method. FIG. 14 is a schematic flowchart of an information generation method provided in at least some embodiments of the present disclosure.

As shown in FIG. 14, the information generation method can include the following step S50.

Step S50: generating mobile terminal information corresponding to a mobile terminal.

For example, the mobile terminal information includes an identity code of the mobile terminal. The identity code of the mobile terminal includes a product brand code of a manufacturer that manufactures the mobile terminal and a company code corresponding to the mobile terminal. The identity code of the mobile terminal can include at least part of information in the information header of the mobile terminal information and at least part of information in the mobile terminal identity information. The identity code of the mobile terminal is used for identifying the mobile terminal, in other words, when the control terminal parses the received mobile terminal information, the identity code of the mobile terminal in the mobile terminal information can be parsed, thereby uniquely determining one mobile terminal.

For example, the mobile terminal information is transmitted to a control terminal; and the control terminal identifies, based on the mobile terminal information, the mobile terminal corresponding to the mobile terminal information, and controls the mobile terminal.

For example, in some embodiments, the information generation method can further include generating control terminal information corresponding to the control terminal.

For example, the control terminal information includes an identity code of the control terminal. The identity code of the control terminal includes a product brand code of a manufacturer that manufactures the control terminal and a company code corresponding to the control terminal. The identity code of the control terminal can include at least part of information in the information header of the first control terminal control information and at least part of information in the control terminal identity information. The identity code of the control terminal is used for identifying the control terminal, in other words, the mobile terminal can uniquely determine one control terminal by parsing the identity code of the control terminal in the received control terminal control information. Thus, the mobile terminal and the control terminal can identify the identities of each other and implement mutual control. Meanwhile, the operation processes can be simplified, and the control operations of the control terminal are caused to be more flexible and changeable.

In the information generation method provided in the embodiments of the present disclosure, the identity information of the mobile terminal and the identity information of the control terminal can be coded using a uniform coding standard to obtain the mobile terminal information and the control terminal information. The control terminal can identify the mobile terminal information of different mobile terminals to implement the control on the different mobile terminals. The mobile terminal can identify the control terminal information of different control terminals so as to be controlled by the different control terminals. Thus, a mobile terminal can be allowed to arbitrarily match a control terminal; the control on the mobile terminal can be implemented conveniently; and the economic burden of the user can be reduced. When the mobile terminal is an FPV UAV, it is also conducive to standardization and normalization of the FPV market.

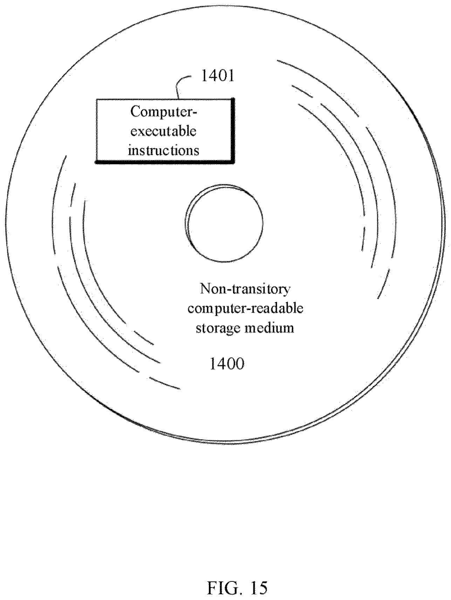

At least one embodiment of the present disclosure further provides a non-transitory computer-readable storage medium. FIG. 15 is a schematic diagram of a non-transitory computer-readable storage medium provided in an embodiment of the present disclosure.

As shown in FIG. 15, one or more computer-executable instructions 1401 can be non-transiently stored on the non-transitory computer-readable storage medium 1400. For example, when the computer-executable instructions 1401 are executed by a computer, one or more steps in the decoding method described in any foregoing embodiment, one or more steps in the data processing method described in any foregoing embodiment, or one or more steps in the information generation method described in any foregoing embodiment can be performed.

For example, when one part of the computer-executable instructions 1401 is executed by a computer, one or more steps in the decoding method described in any foregoing embodiment can be performed; when another part of the computer-executable instructions 1401 is executed by the computer, one or more steps in the data processing method described in any foregoing embodiment can be performed; and when further another part of the computer-executable instructions 1401 is executed by the computer, one or more steps in the information generation method described in any foregoing embodiment can be performed.

For example, the non-transitory computer-readable storage medium 1400 may comprise an arbitrary combination of one or more computer program products. The computer program products may comprise various forms of computer-readable storage media, such as volatile memory and/or non-volatile memory. The volatile memory may comprise, for example, a random-access memory (RAM) and/or a cache or the like. The non-volatile memory may comprise, for example, a read only memory (ROM), a hard disk, an erasable programmable read only memory (EPROM), a portable compact disc-read only memory (CD-ROM), a USB memory, a flash memory, and the like. Various applications, various data, and the like can also be stored in the non-transitory computer-readable storage medium 1400.

For the present disclosure, the following statements should be noted:
(1) the accompanying drawings of the embodiment(s) of the present disclosure involve only the structure(s) related to the embodiment(s) of the present disclosure, and other structure(s) can refer to in common design(s);
(2) for the purpose of clarity, in accompanying drawings for illustrating the embodiment(s) of the present disclosure, the thickness and size of a layer or a structure may be enlarged. However, it should be understood that, in the case in which a component or element such as a layer, film, region, substrate or the like is referred to be "on" or "under" another component or element, the component or element may be "directly" "on" or "under" the another component or element, or a component or element can be interposed therebetween.
(3) in case of no conflict, the embodiments and the features in the embodiment(s) of the present disclosure can be combined with each other to obtain new embodiment(s).

What have been described above are only specific implementations of the present disclosure, the protection scope of the present disclosure is not limited thereto, and the protection scope of the present disclosure should be based on the protection scope of the claims.

## Claims

1. A decoding method, comprising:
parsing combined data that is received, wherein the combined data is data obtained by combining image data captured by a mobile terminal and mobile terminal information corresponding to the mobile terminal; and
in response to obtaining, by the parsing, an extended data bit string corresponding to the mobile terminal information, parsing extended data encoding information corresponding to the mobile terminal information from the combined data, and decoding the extended data encoding information to obtain the mobile terminal information.

2. The decoding method according to claim 1, further comprising:
parsing image encoding information corresponding to the image data from the combined data; and
decoding the image encoding information to obtain the image data.

3. The decoding method according to claim 1 or 2, wherein the decoding method is applied to a control terminal, the combined data is transmitted by the mobile terminal to the control terminal through an image transmission channel.

4. The decoding method according to any one of claims 1 to 3, wherein the mobile terminal is an unmanned aerial vehicle, and the mobile terminal information comprises information generated by the unmanned aerial vehicle.

5. A data processing method, applied to a first mobile terminal and comprising:
obtaining image data captured by the first mobile terminal;
generating mobile terminal information corresponding to the first mobile terminal;
combining the image data and the mobile terminal information to obtain combined data; and
transmitting the combined data to a control terminal.

6. The data processing method according to claim 5, wherein the first mobile terminal comprises an unmanned aerial vehicle.

7. The data processing method according to claim 5 or 6, wherein the generating mobile terminal information corresponding to the first mobile terminal comprises:
obtaining at least one first state parameter corresponding to the first mobile terminal,
wherein the at least one first state parameter is used for indicating a state of the first mobile terminal and a condition of an environment where the first mobile terminal is located; and
generating, based on the at least one first state parameter, state information,
wherein the mobile terminal information comprises the state information.

8. The data processing method according to claim 7, wherein the first mobile terminal comprises at least one sensor; and
the obtaining at least one first state parameter corresponding to the first mobile terminal comprises:
collecting sensing data respectively corresponding to the at least one sensor to obtain at least one sensor sensing parameter, wherein the at least one first state parameter comprises the at least one sensor sensing parameter.

9. The data processing method according to claim 7 or 8, wherein the at least one first state parameter comprises at least one of following parameters: an ambient light intensity, a vision parameter, a height, a power, a distance, and an ambient temperature.

10. The data processing method according to any one of claims 7 to 9, wherein the generating mobile terminal information corresponding to the first mobile terminal further comprises:
obtaining an information header and mobile terminal identity information corresponding to the first mobile terminal,
wherein the mobile terminal information further comprises the information header and
the mobile terminal identity information, and the information header and the mobile terminal identity information are used for identifying the first mobile terminal.

11. The data processing method according to claim 10, wherein the information header comprises at least one of following information: copyright information, encryption information, a product category code corresponding to the first mobile terminal, and a company code corresponding to the first mobile terminal;
the mobile terminal identity information comprises application identity identification information and module identification information;
the application identity identification code comprises a product brand code of a manufacturer that manufactures the first mobile terminal, a field and type code corresponding to an application field to which the first mobile terminal belongs, a frequency band code corresponding to an operating frequency band corresponding to the first mobile terminal, and a channel code corresponding to an operating channel corresponding to the first mobile terminal; and
the module identification information represents a production number corresponding to the first mobile terminal.

12. The data processing method according to any one of claims 7 to 11, wherein the generating mobile terminal information corresponding to the first mobile terminal further comprises:
determining that any first state parameter of the at least one first state parameter does not meet a state condition corresponding to the any first state parameter, generating alerting information,
wherein the mobile terminal information further comprises the alerting information, and the alerting information is used for informing the control terminal of the first mobile terminal being in an abnormal state.

13. The data processing method according to claim 12, wherein the generating mobile terminal information corresponding to the first mobile terminal further comprises:
in response to generating the alerting information, generating mobile terminal control information;
performing an operation corresponding to the mobile terminal control information under control of the mobile terminal control information; and
in response to performing the operation corresponding to the mobile terminal control information under the control of the mobile terminal control information, generating notification information,
wherein the mobile terminal information further comprises the notification information, and the notification information is used for informing the control terminal of the first mobile terminal having performed the operation corresponding to the mobile terminal control information.

14. The data processing method according to any one of claims 7 to 13, wherein the generating mobile terminal information corresponding to the first mobile terminal further comprises:
receiving at least one second state parameter transmitted from a second mobile terminal and corresponding to the second mobile terminal;
determining, based on the at least one first state parameter and the at least one second state parameter, a relative state between the first mobile terminal and the second mobile terminal; and
generating, based on the relative state, control suggestion information,
wherein the mobile terminal information further comprises the control suggestion information, and the control suggestion information indicates suggesting the control terminal to perform an operation corresponding to the control suggestion information.

15. The data processing method according to any one of claims 5 to 14, wherein the transmitting the combined data to the control terminal comprises transmitting the combined data to the control terminal through a first image transmission channel.

16. A data processing method, applied to a control terminal and comprising:
receiving first combined data transmitted from a first mobile terminal, wherein the first combined data is data obtained by combining first image data captured by the first mobile terminal and first mobile terminal information corresponding to the first mobile terminal;
parsing the first combined data to obtain the first image data and the first mobile terminal information, wherein the first image data is used for displaying;
in response to the first mobile terminal information, generating first control terminal control information for controlling the first mobile terminal; and
transmitting the first control terminal control information to the first mobile terminal to control the first mobile terminal.

17. The data processing method according to claim 16, wherein the control terminal comprises a display screen, and
the data processing method further comprises: displaying the first image data on the display screen.

18. The data processing method according to claim 16 or 17, wherein the transmitting the first control terminal control information to the first mobile terminal to control the first mobile terminal comprises:
determining, based on the first control terminal control information, a second image transmission channel; and
transmitting, through the second image transmission channel, the first control terminal control information to the first mobile terminal to control the first mobile terminal.

19. The data processing method according to any one of claims 16 to 18, further comprising:
receiving second combined data transmitted from a second mobile terminal, wherein the second combined data is data obtained by combining second image data captured by the second mobile terminal and second mobile terminal information corresponding to the second mobile terminal;
parsing the second combined data to obtain the second image data and the second mobile terminal information, wherein the second image data is used for displaying;
in response to the second mobile terminal information, generating second control terminal control information for controlling the second mobile terminal; and
transmitting the second control terminal control information to the second mobile terminal to control the second mobile terminal.

20. The data processing method according to claim 19, wherein the control terminal comprises a display screen, and
the data processing method further comprises: displaying the first image data and the second image data on the display screen.

21. The data processing method according to claim 20, wherein the display screen comprises a display region, and the display region comprises a first display sub-region; and
the displaying the first image data and the second image data on the display screen comprises:
displaying the first image data in the display region; and
displaying the second image data in the first display sub-region,
wherein in the first display sub-region, the second image data overlies a part, in the first display sub-region, of the first image data.

22. The data processing method according to claim 20, wherein the display screen comprises a display region, the display region comprises a first display sub-region and a second display sub-region, and the first display sub-region and the second display sub-region do not overlap; and
the displaying the first image data and the second image data on the display screen comprises:
displaying the first image data in the first display sub-region; and
displaying the second image data in the second display sub-region.

23. The data processing method according to any one of claims 16 to 22, wherein the first control terminal control information comprises an information header, control terminal identity information, and control interaction information;
the information header comprises at least one of following information: copyright information, encryption information, a product category code corresponding to the control terminal, and a company code corresponding to the control terminal, and the encryption information is determined based on the first mobile terminal information;
the control terminal identity information comprises application identity identification information and module identification information;
the application identity identification code comprises a product brand code corresponding to a manufacturer that manufactures the control terminal, a field and type code corresponding to an application field to which the control terminal belongs, and a frequency band code corresponding to an operating frequency band that corresponds to the control terminal;
the module identification information represents a production number corresponding to the control terminal; and
the control interaction information comprises at least one of following information:
control mode information, mobile terminal identification information for indicating the first mobile terminal, transmission channel information, state control information, state mode information, shooting information, lighting information, and angle information,
wherein the state control information is used for controlling a motion and an attitude of the first mobile terminal.

24. The data processing method according to claim 23, wherein the control terminal comprises a display screen, the display screen comprises a touch remote control region; the touch remote control region comprises a plurality of virtual keys; and the control interaction information is determined based on an operation applied to the plurality of virtual keys.

25. A mobile terminal, comprising:
an obtaining module configured to obtain image data captured by the mobile terminal;
a mobile terminal generation module configured to generate mobile terminal information corresponding to the mobile terminal;
a combination module configured to combine the image data and the mobile terminal information to obtain combined data; and
a mobile terminal transmission module configured to transmit the combined data to a control terminal.

26. A control terminal, comprising:
a receiving module configured to receive combined data transmitted from a mobile terminal, wherein the combined data is data obtained by combining image data captured by the mobile terminal and mobile terminal information corresponding to the mobile terminal;
a parsing module configured to parse the combined data to obtain the image data and the mobile terminal information, wherein the image data is used for displaying;
a control terminal generation module configured to, in response to the mobile terminal information, generate control terminal control information for controlling the mobile terminal; and
a control terminal transmission module configured to transmit the control terminal control information to the mobile terminal to control the mobile terminal.

27. An information generation method, comprising:
generating mobile terminal information corresponding to a mobile terminal,
wherein the mobile terminal information comprises an identity code of the mobile terminal;
the identity code of the mobile terminal comprises a product brand code of a manufacturer that manufactures the mobile terminal and a company code corresponding to the mobile terminal; and
the mobile terminal information is transmitted to a control terminal; and the control terminal identifies, based on the mobile terminal information, the mobile terminal corresponding to the mobile terminal information, and controls the mobile terminal.

28. A non-transitory computer-readable storage medium, wherein the non-transitory computer-readable storage medium stores computer-executable instructions, and the computer-executable instructions, when executed by a processor, cause implementing the decoding method according to any one of claims 1 to 4 or the data processing method according to any one of claims 5 to 24 or the information generation method according to claim 27.
